(19) Europäisches Patentamt
European Patent Office
Office européen des brevets

(11) **EP 3 410 864 B1**

(12) **EUROPEAN PATENT SPECIFICATION**

(45) Date of publication and mention
of the grant of the patent:
**08.12.2021 Bulletin 2021/49**

(51) Int Cl.:
**A23B 5/005** (2006.01)    **A23J 1/08** (2006.01)

(21) Application number: **17747903.7**

(86) International application number:
**PCT/US2017/013221**

(22) Date of filing: **12.01.2017**

(87) International publication number:
**WO 2017/136119 (10.08.2017 Gazette 2017/32)**

(54) **DEFLAVORED EGG PROTEIN ISOLATE, PRODUCTS MADE WITH PROTEIN ISOLATES**

ENTAROMATISIERTES EIPROTEIN-ISOLAT, PRODUKTE AUS PROTEINISOLATEN

ISOLAT DE PROTÉINE D' UF DÉSAROMATISÉ, PRODUITS RÉALISÉS À L'AIDE DES ISOLATS DE PROTÉINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2016 US 201662291811 P**
**27.05.2016 US 201662342588 P**
**11.01.2017 US 201715403921**

(43) Date of publication of application:
**12.12.2018 Bulletin 2018/50**

(73) Proprietor: **Rembrandt Enterprises, Inc.**
**Spirit Lake, Iowa 51360 (US)**

(72) Inventors:
• **CEPEDA JIMENEZ, Jihan**
**Spirit Lake**
**Iowa 51360 (US)**
• **MCKIBBIN, Mindi**
**Spirit Lake**
**Iowa 51360 (US)**

(74) Representative: **Potter Clarkson**
**The Belgrave Centre**
**Talbot Street**
**Nottingham NG1 5GG (GB)**

(56) References cited:
EP-A2- 1 897 452        EP-B1- 1 993 693
WO-A1-2013/002786        WO-A1-2013/002786
US-A1- 2005 233 053        US-A1- 2005 276 904
US-A1- 2012 142 587        US-A1- 2014 220 225
US-B2- 7 101 585

• YAO ET AL.: 'Quantification of Egg Yolk Contamination in Egg White Using UVNis Spectroscopy: Prediction Model Development and Analysis' FOOD CONTROL vol. 43, 2014, pages 88 - 97, XP055405446

EP 3 410 864 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present application is directed to deflavored egg protein isolates, compositions containing deflavored egg protein isolates, and methods of making deflavored egg protein isolates.

**Background**

Protein is one of the key ingredients of any balanced diet. It is responsible for building muscle and many other tissues, and as such protein consumption is closely tied to muscular health and overall fitness.

In recent years, various protein compositions have become common dietary supplements. For example, whey protein is sold in a dried form for addition to various food compositions, such as fruit smoothies that contain blended fruit, water or ice, and dried whey protein. Soy protein is often also added. Egg proteins are also often added to many food compositions, such as with whole eggs in baked goods or separated egg yolk or egg albumen (also known as egg white) in mayonnaises, sauces or dressings and bakery or meat applications, respectively. Whole egg, as well as egg albumen, are known as being particularly desirable protein sources because they provide high levels of a wide variety of key essential amino acids. Also, egg proteins do not contain some of the drawbacks of various other protein sources, such as whey protein, which can contain at least some level of lactose that is not readily digested by people with lactose intolerance.

Unfortunately, egg protein has significant challenges to its incorporation into some food items. For example, existing egg products often readily gel upon heating, such as during traditional beverage or dairy pasteurization (ultra-high temperature, or "UHT", pasteurization, for example). This gelling makes traditional egg products unsuitable for many applications, such as sports drinks where relatively low viscosity is desired. Also, egg products are characterized for being rich in sulfur and minerals that often provide an off-flavor to certain food items, such as beverages, that is not desirable.

Therefore, a need exists for improved egg proteins, in particular egg protein compositions that can be added to a variety of food products without the limitations and downsides of current egg products.

US 2005/233053 A1 discloses an ultra high-pressure homogenization process for making a stable protein-based acid beverage.

WO 2013/002786 A1 discloses baked food compositions comprising soy whey proteins that have been isolated from processing streams.

**Summary**

The invention is set out in the claims.

The disclosure relates generally to the processing of egg protein isolates, from mixtures containing whole egg, egg white, and/or egg yolk, for use in various food, sports nutrition and nutraceutical applications. More particularly, the disclosure relates to methods and apparatuses for deflavoring egg products and concentrating the protein content to elevated levels, such as to greater than or equal to 92% dry basis protein.

The methods disclosed herein involve processing high-protein egg product to retain the egg proteins while removing minerals and glucose naturally present in egg. Removing minerals is referred to herein as "deashing". This deashing process improves the final egg product's flavor and provides other benefits. Deflavored egg protein isolate has less egg flavor, is less salty, and is more bland than dried egg. The deflavoring also, unexpectedly, can result in a perceived increase in sweetness of compositions made from the egg protein isolate. When the starting material contains whole egg or egg yolk a defatting step is recommended prior to deashing.

In some implementations, the method includes processing the egg product using ultrafiltration (UF) or nanofiltration (NF) technologies. In example implementations, deashing removes 45 to 100% of minerals. In alternative examples, deashing removes 50 to 80% of minerals. In some examples, the deashing removes greater than 45% or greater than 50% of minerals. In some examples, deashing removes less than 100% or less than 80% of minerals.

The disclosure also relates generally to the processing of egg protein isolates, including egg white protein isolates, for use in various food, sports nutrition and nutraceutical applications. More particularly, the disclosure describes a method of deflavoring egg products and concentrating the protein content to greater than or equal to 92% dry basis protein. A method that is claimed comprises providing a starting material that is liquid egg; deashing the egg protein; concentrating the egg protein; and desugaring the egg protein. The starting material may consist of mixtures of egg whites, whole egg, and / or egg yolk. Alternatively, as otherwise described herein, the defatted egg protein material described on US 2015/0094453 A1 can be used as starting material (as described in FIG 24, the Permeate 2450 could be utilized as a starting material).

In some embodiments, the deashing is accomplished using a nanofiltration or ultrafiltration membrane. The deashing can be accomplished by separation of the minerals from the albumen using a membrane of, for example, 300 to 10,000 daltons (Da). Optionally the deashing is accomplished by separation of the minerals and sugars from the albumen using a membrane of greater than 3,000 Da, such as 3,000 to 10,000 Da. In some embodiments, deashing is accomplished by separation of the minerals from the albumen using a membrane of 1,000 to 5,000 Da. Typically, the deashing is accomplished at a pressure less than 4136.9 kilopascals (kpa) (600 psi), desirably less than 2068.4 kpa (300 psi), and more desirable less than 689.5 kpa (100psi). In some implementations, the deashing and desugaring are simultaneous.

Generally desugaring comprises filtration, but can also or in the alternative comprise fermentation, such as yeast fermentation, or enzymatic reactions with enzymes like glucose oxidase.

The desugaring and deashing can include diafiltration, including diafiltration wherein 2 to 6 diafiltration volumes are used, desirably 4 to 6 diafiltration volumes. The diafiltration can be continuous or discontinuous. Typically, diafiltration reduces the mineral content of the albumen by at least 50%. In some constructions diafiltration reduces the mineral content of the albumen by at least 60%. Alternatively, diafiltration reduces the mineral content of the albumen by at least 70%.

The resulting egg protein product has, in some implementations, an ash content below 3%, optionally less than 2%, and a gel strength of less than 200g, optionally less than 150g, and frequently with low elasticity.

Desirably the deflavored egg protein isolate has a color differentiation of greater than 6 in a 10% solution when compared to reconstituted dried egg, wherein color differential is measured by

$$\Delta E_{ab}^{*} = \sqrt{(L_2^* - L_1^*)^2 + (a_2^* - a_1^*)^2 + (b_2^* - b_1^*)^2}$$

Color differentiation of greater than 6 is desirable for final beverage applications as it indicates minimal impact to the final beverage color (reducing yellowness often seen from proteins).

Otherwise described herein is a beverage containing an egg protein isolate.

Otherwise described herein is an egg albumen isolate having reduced foaming properties characterized by no whippability and/or excessive whip density values greater than 0.15 g/cm$^3$ with low foam stability, and greater than 50% foam reduction after 60 minutes.

Also provided and claimed herein is a method of preparing a high-acid beverage, the method comprising: providing deflavoured egg protein isolate, optionally wherein the deflavoured egg protein isolate has a dry basis protein content greater than or equal to 92%; hydrating the deflavoured egg protein isolate in water to produce the beverage, optionally wherein the deflavoured egg protein isolate is hydrated in water for between 30 and 90 minutes; and adjusting the pH of the beverage to between 3 and 4, optionally wherein adjusting the pH includes adding one of phosphoric acid and citric acid to the beverage.

Also provided and claimed herein is a high acidbeverage comprising water; deflavoured egg protein isolate, optionally wherein the deflavoured egg protein isolate has a protein content greater than or equal to 92% dry basis protein and/or the beverage contains between about 3% and 4% protein by weight; and an acid added to the beverage to alter the pH of the beverage, optionally wherein the acid is one of phosphoric acid and citric acid and/or the pH of the beverage is less than or equal to 4.0. The high acid beverage may be hot fill pasteurized. Generally, the high acidity protein beverage is produced without elevated gelling as a result of the pasteurization, despite the egg content.

In an example implementation, the protein isolate has a whip density of greater than 0.15g/cm$^3$ with low foam stability with more than50 % foam reduction after 60 minutes. The protein isolate can have a reconstituted liquid color of L* greater than 40, optionally greater than 50. The protein isolate has a b* value of less than 15, optionally less than 10 in a 10% solution, and heat stability of ultra-high temperature (UHT), high temperature/short time (HTST) or hot fill beverage processing at protein concentrations of 0 to 8% w/w.

Protein bars made as otherwise described herein can have a browning characteristic of reduced Maillard browning over shelf-life. Baked goods made as otherwise described herein have similar textural properties to dried egg, such as dried egg whites. Protein fortification of baked goods made as otherwise described herein have acceptable sensory characteristics at protein concentrations up to 2 times standard baked goods.

The method disclosed herein involves processing an egg protein material comprising egg white, whole egg, and/or egg yolk to retain the egg proteins while removing minerals and glucose naturally present in egg. Removing minerals is referred to herein as "deashing." This deashing process improves the final egg product's flavor. Deflavored egg protein isolate has less egg flavor, is less salty, and is more bland than dried egg.

Higher levels of deashing may be achieved if ultra filtration/ nanofiltration is performed with diafiltration. The diafiltration may be either continuous diafiltration (constant volume diafiltration) or discontinuous diafiltration. In some examples, the method is performed with less than 10 diafiltration volumes, optionally between 0.5 to 7 diafiltration volumes. In some examples, the method is performed between 4-6 diafiltration volumes.

In addition, the product may be pH adjusted and homogenized during processing prior to drying to optimize solubility, gelling, heat stability, or other characteristics in final food products such as beverages.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof.

**Brief Description of the Drawings**

Aspects may be more completely understood in connection with the following figures, in which:

FIG. 1 is a flow diagram of a process for making deflavored egg white (albumen) protein isolate.

FIG. 2 is a schematic illustration of membrane filtration and approximated molecular weight cutoff (MWCO).

FIG. 3 is a table showing major proteins in egg whites.

FIG. 4 is a table showing test parameters for spiral wound nanofiltration/ultrafiltration membranes.

FIG. 5 is a table showing processing scenarios for various examples of the disclosed technology.

FIG. 6 is a table showing deashing level and protein content achieved for the processing scenarios of FIG. 5.

FIG. 7 is a table showing powder and liquid color of the product achieved in the processing scenarios of FIG. 5.

FIG. 8 is a photographic comparison of dried egg white and the egg white protein isolate product produced using the disclosed technology.

FIG. 9 is a photographic comparison of solution containing dried egg white and solution containing the egg white protein isolate product produced using the disclosed technology.

FIG. 10A is a table showing an analysis of the resulting egg white protein isolate product produced using the processing scenarios 1-8 of FIG. 5.

FIG. 10B is a table showing an analysis of the resulting egg white protein isolate product produced using the processing scenarios 9-21 of FIG. 5.

FIG. 11A is a table showing the effect of heat treatment prior to drying on protein denaturation/coagulation.

FIG. 11B is a table showing the effect of heat treatment prior to drying on protein denaturation/coagulation.

FIG. 12 is a photograph showing experimental results of heat stability testing on the disclosed egg white protein isolate.

FIG. 13 is a table showing nutritional differences between a beverage mix made with egg whites vs. a beverage mix made with egg white protein isolate of the disclosed technology.

FIG. 14A is a table showing the nutritional content of a high acid ready-to-drink protein beverage formulated with egg white protein isolate of the disclosed technology.

FIG. 14B is a table showing the viscosity of the beverage of Fig. 14A.

FIG. 14C shows viscosities of protein solutions with pH adjustment.

FIG. 14D shows viscosities of protein solutions without pH adjustment.

FIG. 15 is a photographic comparison of a high acid beverage formulated with egg white protein isolate of the disclosed technology, before and after pasteurization.

FIG. 16 is a table showing experimental formulations of yellow cake made with dried egg white or egg white protein isolate of the disclosed technology.

FIG. 17A shows the measurement of cake heights according to AACC 10-91.01.

FIG. 17B shows the cake cutting pattern used to obtain samples for texture analysis by Rhodia Corp & Texture Technologies Corp., USA.

FIG. 18 is a table showing photographic images and quantitative differences between the experimental results of formulations of yellow cake according to FIG. 16.

FIG. 19 shows photographic images of various baked goods made with dried egg white or with egg white protein isolate of the disclosed technology.

FIG. 20 is a table showing ingredients used in experimental nutrition bars formulated with dried egg whites and egg white protein isolate of the disclosed technology.

FIG. 21 is a photographic image comparing a nutrition bar made with dried egg whites and a nutrition bar made with egg white protein isolate of the disclosed technology.

FIG. 22 is a spider chart (radar chart) showing a qualitative comparison of flavor profiles of dried egg white and egg white protein isolate of the disclosed technology.

FIG. 23 is a spider chart (radar chart) showing a qualitative comparison of flavor profiles of milk, whey, and soy protein isolate compared to egg white protein isolate of the disclosed technology.

FIG. 24 is a flow chart showing an implementation of the egg protein isolate of the disclosed technology using a starting mixture of egg white and egg yolk.

FIG. 25 is a table showing typical egg yolk composition.

FIG. 26 is a table showing amino acid compositions for various egg compositions and isolates.

FIG. 27 is a table showing amino acid compositions for various egg compositions and isolates.

While embodiments are susceptible to various modifications and alternative forms, specifics thereof have been shown by way of example and drawings, and will be described in detail. It should be understood, however, that the scope herein is not limited to the embodiments described.

**Detailed Description**

The disclosure relates generally to the processing of mixtures containing egg white, whole egg, and/or egg yolk to produce egg protein isolates for use in various food, sports nutrition and nutraceutical applications. More particularly, the disclosure relates to a method of deflavoring egg products, especially egg products with significant levels of egg white protein, and concentrating the egg protein content, such as to a level of greater than or equal to 92% dry basis protein.

The method involves processing a liquid egg protein material comprising egg white, whole egg, and/or egg yolk to retain the egg proteins while removing minerals and glucose naturally present in egg. Removing minerals is referred to herein as "deashing." This deashing process improves the final egg product's flavor. Deflavored egg protein isolate has less egg flavor, is less salty, and is more bland than dried egg.

In some implementations, the method includes processing the egg product using ultrafiltration (UF) or nanofiltration (NF) technologies. In some implementations, deashing removes 45-100% of minerals. In alternative examples, deashing removes 50-80% of minerals. In some examples, the deashing removes greater than 45% or greater than 50% of minerals. In some examples, deashing removes less than 100% or less than 80% of minerals.

The disclosure relates generally to the processing of egg protein isolates for use in various food, sports nutrition and nutraceutical applications. More particularly, the application relates to a method of deflavoring egg products and concentrating the protein content to greater than or equal to 92% dry basis protein.

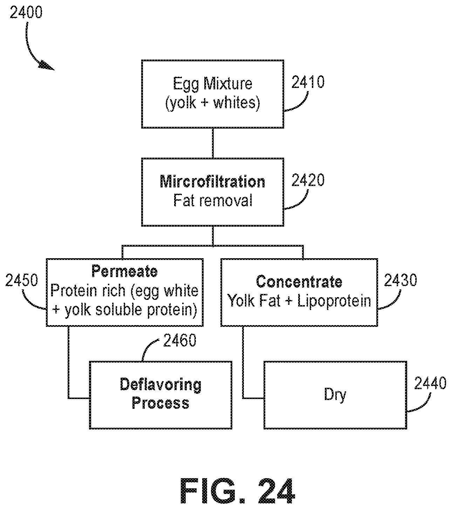

In certain implementations, the method comprises providing a starting material that is liquid egg such as liquid egg white; deashing the egg protein; concentrating the egg protein; and desugaring the egg protein. Optionally, the starting material may comprise a mixture of egg whites, whole egg, and/or egg yolk, which is deashed, concentrated, and desugared. In the case where egg yolk is present, then a defatted step is undertaken first. For example, the defatted egg protein material described in US 2015/0094453A1 can be used as starting material as referenced in FIG 24, Permeate 2450.In some embodiments, the deashing is accomplished using a nanofiltration or ultrafiltration membrane. The deashing can be accomplished by separation of the minerals from the albumen using a membrane of 300 to 1,000 Da. Optionally the deashing is accomplished by separation of the minerals from the albumen using a membrane of greater than 3,000 Da. In some embodiments, deashing is accomplished by separation of the minerals from the albumen using a membrane of 3,000 to 5,000 Da. Typically, the deashing is accomplished at a pressure less than 4136.9 kpa (600 psi), generally less than 2068.4 kpa (300 psi), and desirably less than 689.5 kpa (100psi).

Generally desugaring comprises filtration, but can also or in the alternative comprise fermentation, such as yeast fermentation.

The deflavoring and deashing can include diafiltration, including diafiltration wherein 2 to 6 diafiltration volumes are used, preferably 4 to 6 diafiltration volumes. The diafiltration can be continuous or discontinuous. Typically, diafiltration reduces the mineral content of the albumen by at least 50%. In some constructions diafiltration reduces the mineral content of the albumen by at least 60%. Alternatively, diafiltration reduces the mineral content of the albumen by at least 70%.

The resulting egg protein product has, in some implementations, an ash content below 3%, optionally <2% and a gel strength of less than 200g, optionally <150g with low elasticity.

Desirably the deflavored egg protein isolate has a color differentiation of greater than 6 in a 10% solution when compared to dried egg white, wherein color differential is measured by

$$\Delta E_{ab}^* = \sqrt{(L_2^* - L_1^*)^2 + (a_2^* - a_1^*)^2 + (b_2^* - b_1^*)^2}$$

Color differentiation of greater than 6 is desirable for final beverage applications as it indicates minimal impact to the final beverage color (reducing yellowness often seen from proteins).

The disclosure also describes a beverage containing egg protein isolate.

The disclosure also describes an egg albumen isolate having a foaming property of greater or equal to 0.15g/cm$^3$

(a low foaming value) with low foam stability, optionally greater or equal to 50% foam reduction after 60 minutes.

Also provided herein is a high acid beverage comprising comprising water; deflavoured egg protein isolate, optionally wherein the deflavoured egg protein isolate has a protein content greater than or equal to 92% dry basis protein and/or the beverage contains between about 3% and 4% protein by weight; and an acid added to the beverage to alter the pH of the beverage, optionally wherein the acid is one of phosphoric acid and citric acid and/or the pH of the beverage is less than or equal to 4.0. The high acidity beverage may be hot fill pasteurized. The protein isolate has a whip density of greater than $0.15g/cm^3$ with low foam stability (greater than 50% foam reduction after 60 minutes; a reconstituted liquid color of L* >40, optionally >50 and a b* value of greater than 15, optionally greater than 10 in a 10% solution; and heat stability of UHT, HTST or hot fill beverage processing at protein concentrations of 0 to 8% w/w.

Protein bars made which include this egg protein isolate have a browning characteristic of reduced Maillard browning over shelf-life. Baked goods made which include this egg protein isolate have similar textural properties to dried egg whites. Protein fortification of baked goods made which include this egg protein isolate have acceptable sensory characteristics at egg protein concentrations up to twice standard baked goods.

The method involves processing a liquid egg protein material comprising egg white, whole egg and/or egg yolk to retain the egg proteins while removing minerals and glucose naturally present in egg. Removing minerals is referred to herein as "deashing." This deashing process improves the final egg product's flavor. Deflavored egg protein isolate has less egg flavor, is less salty, and is more bland than dried egg.

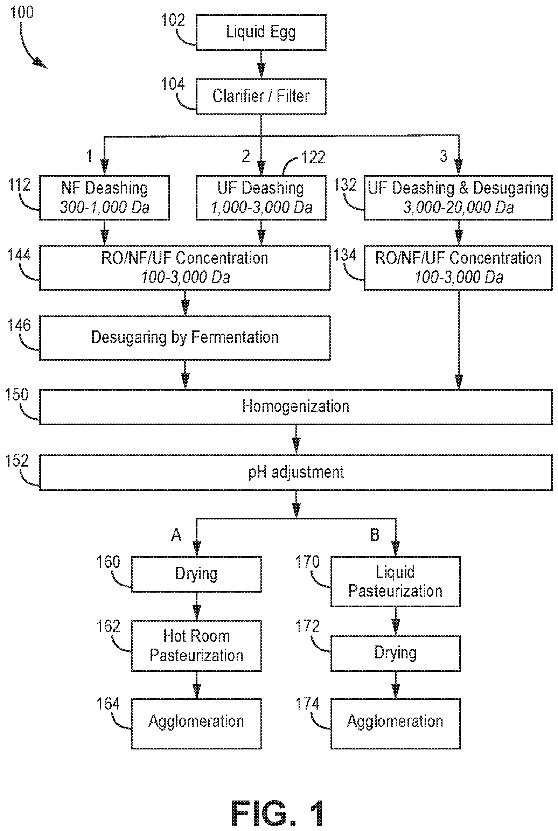

Higher levels of deashing may be achieved if ultra-filtration and/or nanofiltration is performed with diafiltration. The diafiltration may be either continuous diafiltration (constant volume diafiltration) or discontinuous diafiltration. In some examples, the method is performed between 0.5-7 diafiltration volumes. In some examples, the method is performed between 4-6 diafiltration volumes. The process includes, in example embodiments, the steps outlined in Figure 1.

In addition, the product may be pH adjusted and homogenized during processing prior to drying to optimize solubility, gelling, and heat stability characteristics in final food products such as beverages.

Protein isolates are traditionally defined as products with greater than or equal to 90% protein on a dry basis. Standard dried egg whites normally contain 84-88% protein dry basis.

Standard dried egg whites are typically produced by concentrating raw liquid egg whites removing approximately 50% of water, such as by reverse osmosis (RO). Subsequently the concentrated product is desugared by fermentation with yeast or use of enzymes like glucose oxidase and pH adjusted prior to spray drying. Reverse osmosis systems allow water removal from the product with minimal mineral loss; this ensures the final dried egg white is nutritionally equivalent to the starting material.

Deflavored egg protein isolate is a dried protein product containing a minimum 92% dry basis protein (minimum 85% as is protein or 85% per 100 g powder). The flavor of this product is often significantly more neutral than standard dried or liquid egg products (e.g. bland flavor, less salty, less eggy notes). In addition, the final powder may have higher heat stability, that is, a higher coagulation temperature, allowing for better use in beverage processing where ultra-high temperature (UHT) or high-temperature-short-time (HTST) processes are typically used.

Deashing technologies can be used to produce egg protein isolates with a higher protein dry basis. Deashing also deflavors the egg product which is a highly desirable characteristic in food and health & nutrition products such as beverages and protein bars.

Various aspects of the egg protein isolate and process for making it will now be referenced in the figures. Figure 1 shows a flow chart for an example method 100 for making an egg protein isolate. The method begins at step 102, in which liquid egg is provided. The starting raw material used in this process can be, for example, raw, unpasteurized liquid egg or heat treated (such as pasteurized) liquid egg with product solids typically from 10-14%, more typically from 11.5-12.5%. At step 104, the liquid egg is put through an optional clarifier or filter.

After the initial optional clarifier or filtering step, the egg material is deashed. In some implementations, the method includes deashing the egg material using ultrafiltration (UF) or nanofiltration (NF) technologies. In some implementations, deashing removes 45-100% of minerals. In alternative examples, deashing removes 50-80% of minerals. In some examples, the deashing removes greater than 45% or greater than 50% of minerals. In some examples, deashing removes less than 100% or less than 80% of minerals.

In a first example of the technology, the liquid egg material, in this case, liquid egg white, is deashed using nanofiltration in step 112. The nanofiltration membrane may have a molecular weight cutoff of between 300 - 1,000 Da. In a second example of the technology, the liquid egg is deashed at step 122 using ultrafiltration with an ultrafiltration membrane having a molecular weight cutoff of between 1,000 - 3,000 Da. In a third example of the technology, the filtered liquid egg is deashed and desugared in one step, step 132, using an ultrafiltration membrane having a molecular weight cutoff of between 3,000 - 20,000 Da.

In some implementations, specific molecular weight cut-offs for the membrane used for deashing are between 300-20,000 Da. The use of ultrafiltration membranes with a molecular weight cutoff of about 5,000 Da or less minimizes protein loss in the permeate. In alternative examples, the molecular weight cut-offs are between 300-20,000 Da;

800-20,000 Da; 1,000-20,000 Da; 3,000-20,000 Da; 5,000-20,000 Da; 10,000-20,000 Da; 300-10,000 Da; 800-10,000 Da; 3,000-10,000 Da; 5,000-10,000 Da; 300-5,000 Da; 800-5,000 Da; 1,000-5,000 Da; 3,000-5,000 Da; 300-3,000 Da; 800-3,000 Da; 1,000-3,000 Da; 300-1,000 Da; or 800-1,000 Da. Alternatively the molecular weight cut-offs are greater than 300 Da, greater than 800 Da, greater than 1,000 Da, or greater than 3,000 Da. In some examples, the molecular weight cut-offs are less than 20,000 Da, less than 10,000 Da, less than 5,000 Da, less than 3,000 Da, or less than 1,000 Da.

The example process that proceeds to step 132, in which the egg is deashed and desugared simultaneously, desugaring can be achieved during the ultrafiltration step 132 by using filtration elements with molecular weight cutoffs between 3,000-20,000 Da.

During deashing in either step 112 or step 122 or step 132, an initial preconcentration treatment to increase the solid content to up to 24% solids can help remove some sugars and salts upfront, which may reduce the amount of water needed for diafiltration, discussed below. After the liquid egg is deashed in either step 112 or step 122 or step 132, the resulting product is concentrated at step 134 or 144. The concentration steps 134, 144 may be performed using reverse osmosis, nanofiltration, or ultrafiltration. Membrane filtration using reverse osmosis, nanofiltration or ultrafiltration prior to drying improves overall efficiency when the egg protein isolate is dried. In some examples, reverse osmosis, nanofiltration, or very low ultrafiltration is performed with a membrane having a molecular weight cutoff of between 100 - 3,000 Da. Concentrating egg proteins using higher than 3,000 Da membranes can be technically challenging and may lead to considerable protein losses due to the size and shape of egg proteins.

Concentration by evaporation is not recommended for egg because evaporation requires the use of heat. This causes foaming, gelling, or coagulation of the egg.

At step 146, the concentrated egg product of the first and second examples of the technology, which was either deashed in step 112 by nanofiltration or deashed in step 122 by ultrafiltration, is desugared. Desugaring at step 146 can be achieved using yeast fermentation or enzymatic reactions using enzymes like glucose oxidase. Removing sugars from the concentrated egg product can help minimize Maillard reaction browning of the egg protein isolate during subsequent steps such as drying and storage. Desugaring desirably leads to increased blandness of the final egg isolate product.

After the desugaring and concentration steps, at step 150 the egg product is homogenized. Homogenization is an optional process that can be used to reduce viscosity and particle size, and improve overall protein dispersability, particularly when the starting material is raw liquid.

At step 152, the pH of the concentrated, desugared egg product is adjusted. This pH adjustment is an optional process to control protein solubility based on protein isoelectric point. The pH adjustment step 152 ensures that the pH of the finished powder is within specification. The pH can be adjusted to neutral range (e.g., between 6-8) which makes the finished egg protein isolate product more suitable for use in baked goods and neutral or low-acid beverages. Alternatively, the pH can be adjusted to an acidified range (e.g., between 3-5) which makes the egg protein isolate product more suitable for high-acid beverage applications, particularly ready-to-drink beverages.

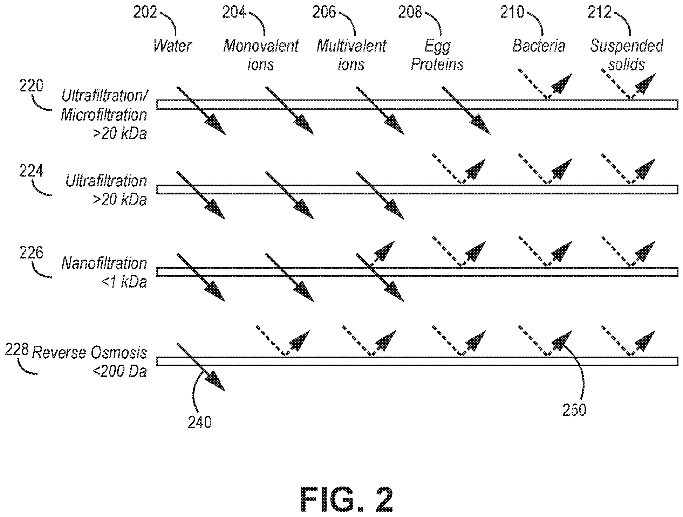

FIG. 2 is a conceptual diagram showing the response of different molecules to different types of filtration. In the diagram, the arrows 240 represent a molecule passing through a membrane or filter, and the arrows 250 represent a molecule not passing through a filter. The filtration processes of interest are ultrafiltration (or microfiltration), occurring at a molecular weight cutoff of greater than 20 kDa (20,000 Da); ultrafiltration at molecular weight cutoffs of less than 20 kDa and greater than 1 kDa; nanofiltration at less than 1 kDa, and reverse osmosis, which has a molecular weight cutoff of less than 200 Da.

As shown in FIG. 2, water 202 will pass through microfiltration, ultrafiltration, nanofiltration, and reverse osmosis filters. Alternative membrane filtration systems such as nanofiltration (NF) and ultrafiltration (UF) can be used to remove not only water but also to demineralize the product, which can help increase the percent of protein in the finished dried product. Microfiltration, ultrafiltration, nanofiltration, and reverse osmosis will each remove bacteria 210 and suspended solids 212 from the liquid egg mixture. Egg proteins 208 can be effectively filtered out using ultrafiltration 224 below 20 kDa, or nanofiltration 226 below one kDa, or using reverse osmosis 228. Egg proteins 208 will pass through a microfiltration or ultrafiltration membrane 220 greater than 20 kDa. Monovalent ions 204 will not pass through a reverse osmosis filter, but will pass through a nanofiltration, ultrafiltration, or microfiltration membrane. Multivalent ions 206 will not pass through a reverse osmosis membrane 228, but will pass through ultrafiltration or microfiltration membranes 220, 224. In the nanofiltration range below 1 kDa, some multivalent ions may pass through the membrane, but some will be filtered out.

Egg protein isolates can be produced using nanofiltration membranes with molecular weight cutoffs less than or equal to 1,000 Da; ultrafiltration membranes with molecular weight cutoffs less than 3,000 Da; or ultrafiltration membranes with molecular weight cutoffs between 3,000 - 20,000 Da.

Successful protein demineralization depends upon use of filtration membranes with the right molecular weight cutoff to remove water and small non-protein species (i.e., sodium ions, salts, divalent/monovalent ions, flavonoids, sugars, etc.) without losing proteins or small protein peptides in the permeate stream. For example, most of the proteins in egg whites have a molecular size between about 14 - 85 kDa. Due to the broad size and shape range of egg proteins, filtration membranes sometimes require feed spacers of greater or equal to 46 mil.

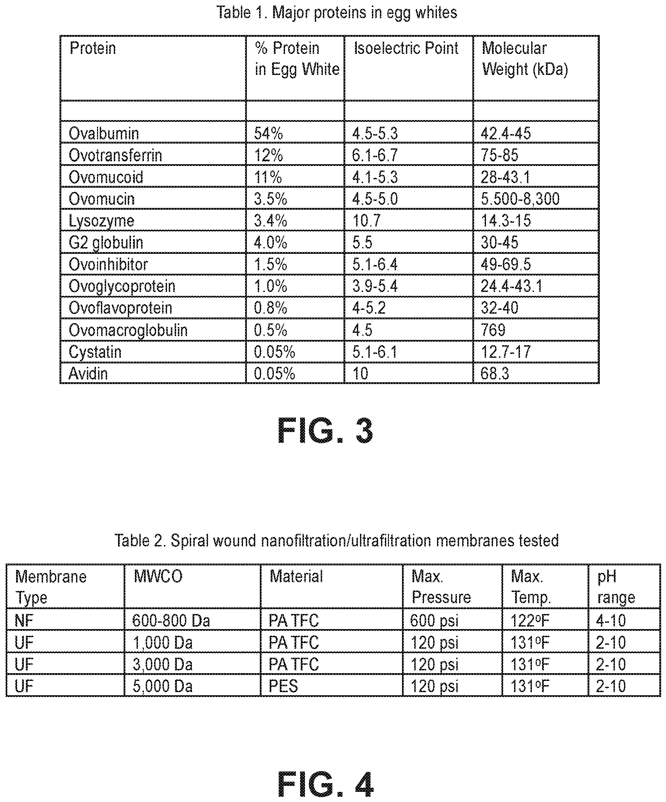

FIG. 3 is a table listing the proteins found in egg whites, along with the isoelectric point and molecular weights of each type of protein. Notably, the proteins in egg whites vary greatly, with the smallest protein, cystatin, having a molecular weight of about 12.7 kDa, and the largest protein, ovomucin, having a molecular weight of as much as 8,300 kDa. The three proteins that make up about 77% of the total amount of protein in egg whites-ovalbumin, ovotransferrin, and ovomucoid-have molecular weights between about 28 - 85 kDa. These three proteins have a globular shape. They have a broad range of isoelectric points-between about 4 and about 7. Overall, the proteins in egg whites have isoelectric points as low as 3.9, and as high as 10.7.

Filtration across a filtration membrane is performed under pressure. Nanofiltration deashing at step 112 allows for the use of relatively higher pressures compared with ultrafiltration at step 122 or ultrafiltration at step 132. Nanofiltration is typically performed at a pressure less than 4136.9 kpa (600 pounds per square inch (psi)), and preferably between 2068.4-2413.2 kpa (300-350 psi). Ultrafiltration and microfiltration require lower pressures, typically below 1034.2 kpa (150 psi), and preferably between 206.8-413.7 kpa (30-60 psi).

The deashing process may be more efficient if performed with diafiltration. The diafiltration can be either continuous or discontinuous, using (for example) between 0.5-7 diafiltration volumes. Diafiltration is preferably at 4-6 diafiltration volumes. This significant amount of water is needed to achieve the necessary amount of desugaring of the egg whites.

Diafiltration is optional, but it is an effective processing step to maximize removal of sugars and minerals. Diafiltration is more efficient if performed at less than 17% solids to minimize membrane fouling and maximize permeate flow rates. Also, if water usage is of concern, pre-concentrating the egg prior to diafiltration will help remove a significant amount of sugars and minerals up front, increasing egg solids from 11-12% to 17-24%. The maximum percentage of solids achieved by filtration are typically about 26%, but the percentage can be as high as 35-40%.

After deashing and desugaring, with or without homogenization and pH adjustment, the liquid egg product can go into a second stage process, in which the deashed and desugared egg protein material can be pasteurized or heat treated and/or dried. The second stage can be performed in various ways. In a first example of the technology at the second stage, the concentrated egg product is dried into a powder at step 160, referring to Fig. 1. The dried powder is then packed and optionally pasteurized/heat treated in powder form inside a hot room at step 162. This step is typically necessary to meet USDA lethality requirements. As will be discussed later, the dried, powdered egg white protein isolate product in this case retains some whipping characteristics, but still has improved characteristics over standard dried egg whites. After pasteurization/heat treatment at step 162, the dried egg white isolate product can go through an additional agglomeration process to instantize the product at step 164. The agglomeration step 164 is optional, however, agglomeration makes the egg white isolate product instantly soluble in water, which is desirable for a number of applications. Optionally, instantizing the egg white isolate powder can include encapsulation with lecithin. Encapsulation improves the dispersability of the powder in water and prevents breakage of the agglomerated particles during transportation and shelf life. Instant dispersability is useful when the egg white protein isolate product is used in dry beverage blends.

In a second example of the technology at the second stage, after demineralization and desugaring (with or without homogenization and pH adjustment), the product is first pasteurized or heat treated in liquid form at step 170. This process eliminates the need for hot room pasteurization/heat treatment of the material in powder form. This pasteurization/heat treatment of the liquid is used particularly when the original product provided at step 102 is raw/unpasteurized liquid egg. Liquid pasteurization/heat treatment at step 170 can be optional if the starting material at step 102 is pasteurized liquid egg.

Pasteurizing or heat treating a concentrated liquid egg protein isolate with high solids can be challenging because there are limitations on temperatures and holding times that can be used to reduce microbial load without resulting in protein denaturation and coagulation. In some examples, heat treatment includes pasteurization for a time limit up to 2 hours at a temperature less than 54°C (129.2°F); or alternatively 1-5 minutes at 55-60°C (133.7-140°F). Heat treating the liquid egg white protein concentrate at temperatures above 60°C (140°F) prior to drying may lead to protein denaturation and coagulation, especially when the liquid product has a high percentage of solids (for example, greater than 20% solids).

When the egg white protein isolate is pasteurized/heat treated in liquid form at step 170 followed by drying at step 172, the heat stability of the resulting product is generally greater than when the egg product is dried at step 160 followed hot room treatment at step 162. Additionally, when the liquid egg white is first pasteurized at step 170 before the drying step 172, the resulting dried egg white protein isolate product has significantly lower whipping and foaming properties compared to standard dried egg whites; this is a desirable characteristic in some food applications.

After or during drying, the product can go through an additional agglomeration process to instantize the product. Agglomeration is an optional process. By eliminating the use of hot room treatment, this instantization step can be completed during drying using fines recycling in tower dryers or in a fluid bed agglomerator. Encapsulation with lecithin is optional, but recommended for improved dispersability of the powder and to reduce breakage of the agglomerated particles during shelf life. As mentioned above, instant dispersability is useful when the egg white protein isolate product is used in dry beverage blends.

**Experimental**

Pilot and Production Trials

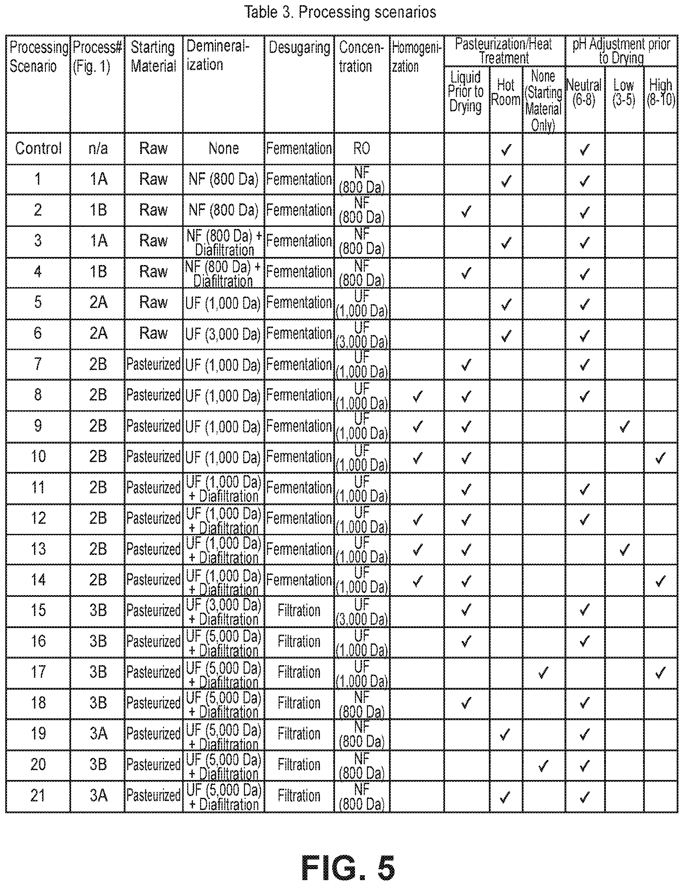

A total of seventeen pilot trials (Processing Scenarios 1-17, detailed in FIG. 5) and one semi-production trial with four variables tested (Processing Scenarios 18-21, detailed in FIG. 5) were conducted. Processes described in relation to FIG. 1 were used in each scenario.

Four different spiral wound UF/NF membranes were tested, as shown in Table 2 of FIG. 4. A nanofiltration (NF) membrane with a molecular weight cutoff (MWCO) of 600-800 Da was tested. The nanofiltration membrane was made of polyamide thin film composite (PA TFC). During filtration, the filter was put under a maximum pressure of 4136.9 kpa (600 pounds per square inch (psi)), subjected to a maximum temperature of 50°C (122°F), and the pH range was between 4-10. Three ultrafiltration (UF) membranes were also tested. Two ultrafiltration filters were made of polyamide thin film composite (PA TFC) and had a molecular weight cutoff (MWCO) of 1,000 Da and 3,000 Da respectively. One ultrafiltration membrane was made of polyethersulfone (PES) and had a molecular weight cutoff of 5,000 Da. In each case, the ultrafiltration membranes were subjected to a maximum pressure of 827.4 kpa (120 psi); a maximum temperature of 55°C (131°F), and a pH range between 2-10.

"Process 1" refers to the example in which at step 102 raw or pasteurized egg whites are provided; in step 104, the egg whites are optionally filtered; at step 112 the egg product is deashed using nanofiltration between 300 - 1,000 Da; at step 146 the egg product is desugared; at step 150 the egg product is optionally homogenized; and at step 152 the egg product is optionally pH-adjusted.

"Process 2" refers to the example in which: at step 102 raw or pasteurized egg whites are provided; in step 104, the egg whites are optionally filtered; at step 122 the egg product is deashed using ultrafiltration between 1,000 - 3,000 Da; at step 144 the egg product is concentrated through filtration with a molecular cutoff between 100 - 3,000 Da; at step 146 the egg product is desugared; at step 150 the egg product is optionally homogenized; and at step 152 the egg product is optionally pH-adjusted.

"Process 3" refers to the example in which: at step 102 raw or pasteurized egg whites are provided; at step 104, the egg whites are optionally filtered; at step 132 the egg product is both deashed and desugared using ultrafiltration between 3,000 - 20,000 Da; at step 134 the egg product is concentrated through filtration with a molecular cutoff between 100 - 3,000 Da; at step 150 the egg product is optionally homogenized; and at step 152 the egg product is optionally pH-adjusted.

"Process A" refers to the example in which a deashed, concentrated egg product created using one of Processes 1, 2, or 3 is put through an additional process in which: at step 160, the egg product is dried; at step 162 the dried egg product is put through hot room pasteurization; and at step 164 the dried egg protein isolate product is optionally agglomerated and optionally instantized.

"Process B" refers to the example in which a deashed, concentrated egg product created using one of Processes 1, 2, or 3 is put through an additional process in which: at step 170, the liquid egg product is pasteurized using liquid pasteurization; at step 172 the pasteurized liquid egg product is dried; and at step 174 the dried egg protein isolate product is optionally agglomerated and optionally instantized.

In turn, the phrase "Process 1A" refers to an example in which liquid egg whites are first put through Process 1, and then put through Process A; "Process 2B" refers to an example in which liquid egg whites are first put through Process 2, and then put through Process B; "Process 3A" refers to an example in which liquid egg whites are first put through Process 3, and then put through Process A, etc.

In the experimental processing scenarios, raw and pasteurized liquid egg whites were converted into dried egg white protein isolates using processes 1A, 1B, 2A, 2B, 3A, and 3B. The control scenario used a process in which raw liquid egg white was first concentrated using reverse osmosis. The concentrated liquid egg white was desugared using yeast fermentation, then pH-adjusted to a neutral pH. The liquid egg white was dried and then heat treated using a hot room pasteurization. The control trial did not undergo deashing or homogenization. Table 3 of FIG. 5 provides additional details regarding the parameters used in each processing scenario.

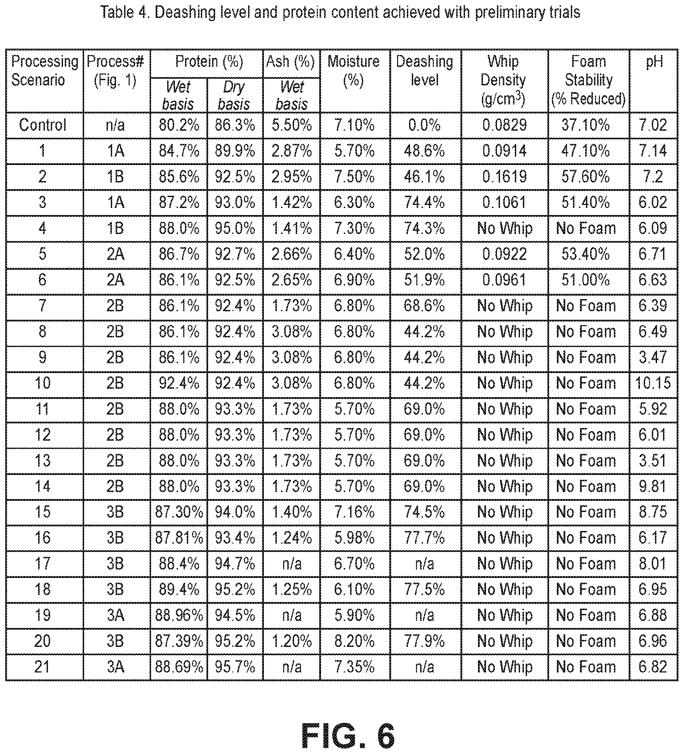

Turning to FIG. 6, deashing levels and protein content of each trial is recorded in Table 4. The maximum protein concentration achieved was 92.7% dry basis without diafiltration (processing scenario 5), and 95.7% dry basis with diafiltration (processing scenario 21). The average deashing level was 50% without diafiltration and 73.2% with diafiltration. Each of the processes 1A, 1B, 2A, 2B, 3A and 3B resulted in dried egg white product with greater than 90% protein dry basis, which therefore could be classified as egg white protein isolate. It is possible to increase protein concentration by adjusting membrane type and processing conditions. For example, the use of diafiltration can result in higher protein concentration, although diafiltration may increase the cost and time of the process.

Process A, which used hot room pasteurization, had slightly lower whipping and foaming characteristics compared to standard egg whites in the control scenario. Conversely, Process B, which used liquid pasteurization and no hot room treatment, either did not foam or resulted in denser foams that fell apart significantly faster than the control.

The reduced whipping and foaming properties that resulted from the processes described herein could make the product more suitable for the beverage market. Additionally, mineral removal by deashing resulted in a milder, less salty egg flavor that could make the product suitable for the beverage market. However, the resulting egg white protein isolate product was characterized by poor dispersability, similar to standard egg whites. Thus, for applications in which solubility and dispersability are important, such as in the beverage market, the product may need to be instantized.

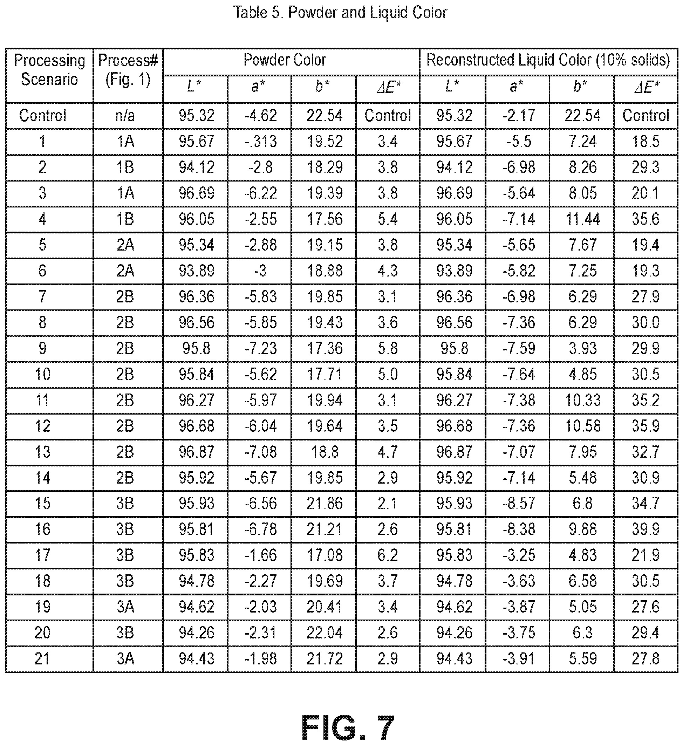

Turning to FIG. 7, the color of the powdered egg white protein isolate and a liquid solution of reconstituted egg white protein isolate were measured using a Konica Minolta CR-400 colorimeter. The control dried egg white and a liquid solution of the reconstituted dried egg white was also tested in the same manner.

Color values of the dry and liquid samples were measured. Three readings were taken and averaged for each sample and recorded in Table 5. Specifically, the L*, a*, and b* values were measured. L* is defined as the difference in lightness and darkness of the sample compared to a standard. The L* value of the sample minus the L* value of the standard results in the recorded L* value in Table 5. A higher L* value indicates a relatively lighter color, and a lower L* value indicates a relatively darker color. The a* value is the difference along the red and green continuum. The a* value of the sample minus the a* value of a standard results in a relative a* value recorded in Table 5, with higher numbers being more red and lower numbers being more green as compared to the standard. The b* value of the sample minus the b* value of a standard results in a relative b* value recorded in Table 5, with higher numbers being more yellow and lower numbers being more blue as compared to the standard.

E* is the total color difference between all three coordinates L*, a*, and b*. To determine the total color difference between all three coordinates, the following formula is used:

$$\Delta E_{ab}^* = \sqrt{(L_2^* - L_1^*)^2 + (a_2^* - a_1^*)^2 + (b_2^* - b_1^*)^2}$$

A delta E* value of 0-1 indicates a normally invisible difference. A delta E* of 1-2 indicates a very small difference that is only obvious to a trained eye. A delta E* value of 2-3.5 indicates a medium difference that is also obvious to an untrained eye. A delta E* value of 3.5-5 indicates an obvious difference, and a delta E* value greater than 6 indicates a very obvious difference.

Lighter, less yellow color is a desirable characteristic especially when formulating beverage products. Experimental results found that the dried egg white protein isolate samples prepared according to the methods herein were significantly less yellow and slightly less green than the control dried egg white sample. When the powders were reconstituted with water to 10% solids, delta E* values ranged from 18 to 40 indicating a very significant difference from standard dried egg whites. Reconstituted liquid egg white protein isolate samples were much less yellow (lower b* value) and significantly lighter (higher L* value) than the control sample.

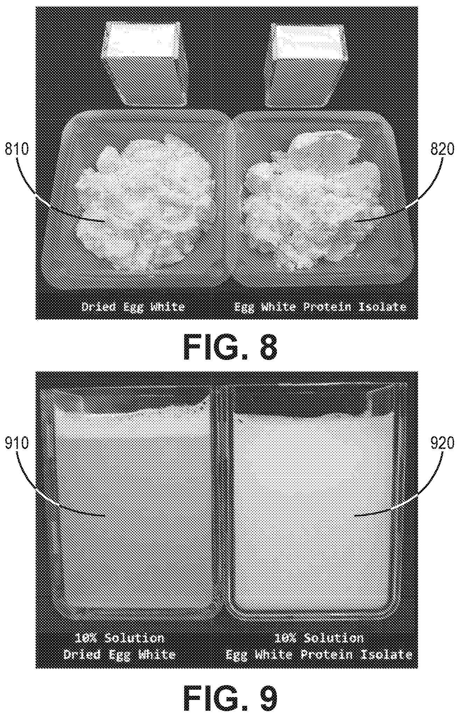

FIG. 8 is a photographic comparison of dried egg white 810 and dried egg white protein isolate 820. FIG. 9 is a photographic comparison of a reconstituted 10% solution of dried egg white 910 and a reconstituted 10% solution of egg white protein isolate 920 prepared according to the teachings herein. The photographic results show that in both dry and liquid form, the egg white protein isolate is considerably whiter compared to standard egg white.

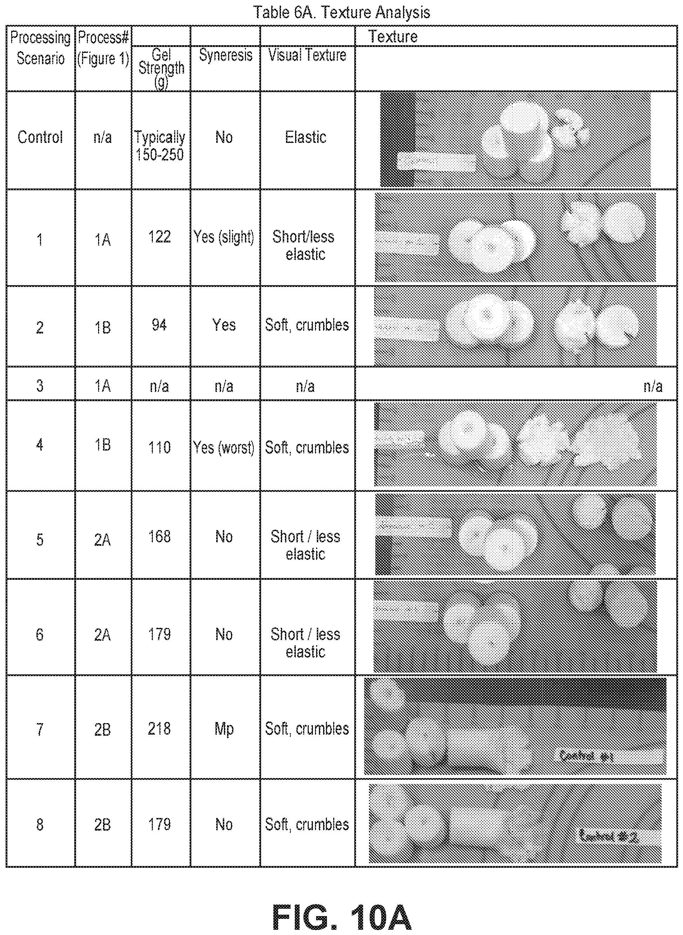

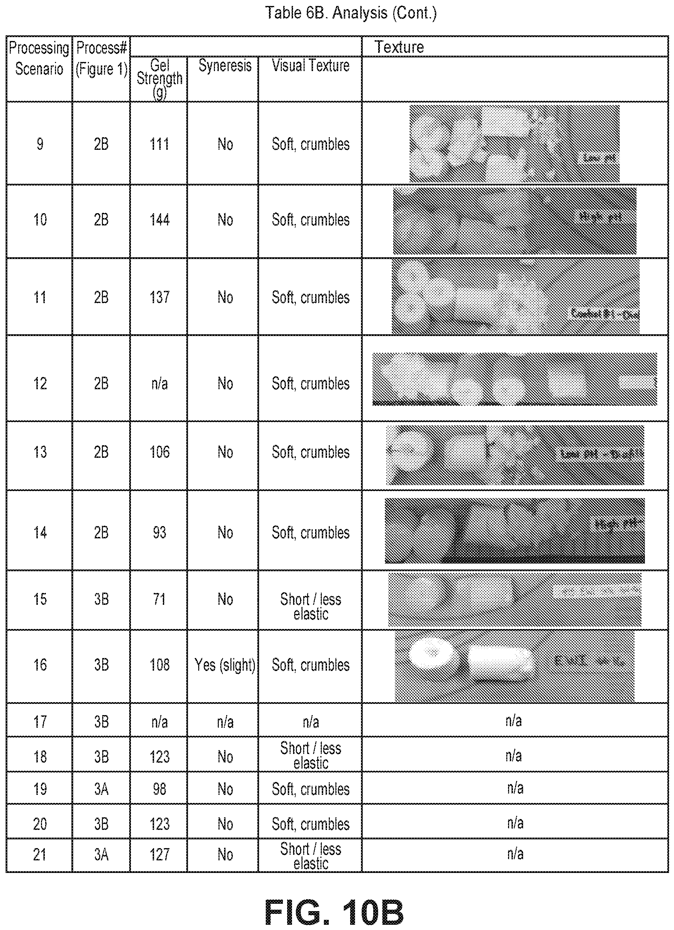

Turning to FIG. 10A-B, a texture and gel strength analysis was performed for each of the samples. The product resulting from Process A had slightly lower gelling characteristics compared to the control sample. The gels formed from egg white protein isolate made using Process A had shorter texture and were less elastic than standard egg whites. Conversely, the product resulting from Process B resulted in significantly less gelling properties and the gels crumbled when pressure was applied. Reduced gelling properties could make the product more suitable for the beverage market: beverages containing egg white protein isolate with reduced gelling may have fewer problems with protein coagulation during pasteurization under UHT or HTST treatment.

Experimental Results for Process B: Heat Treatment Prior to Drying

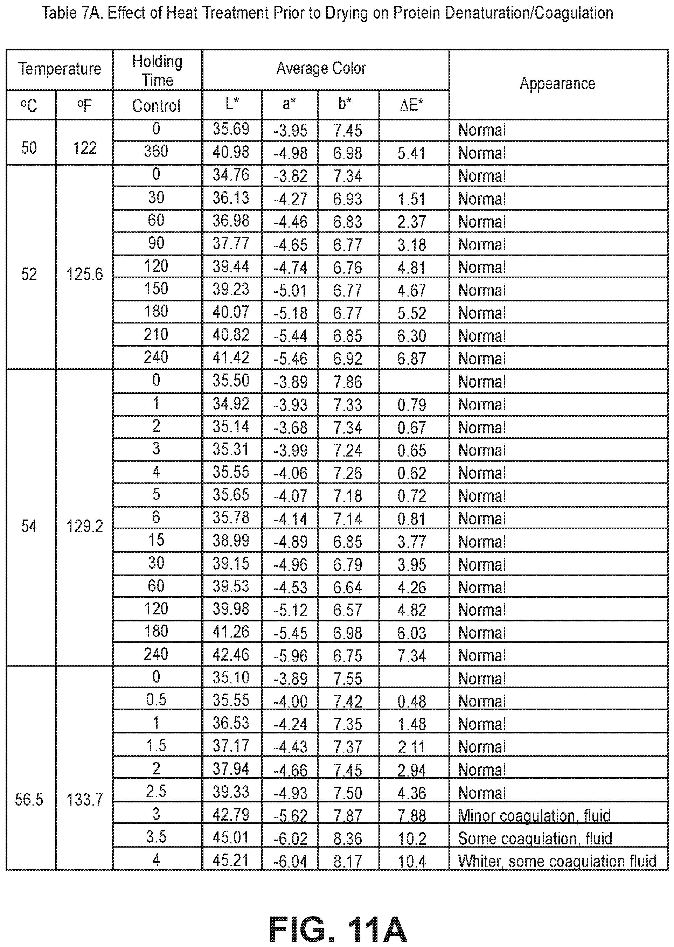

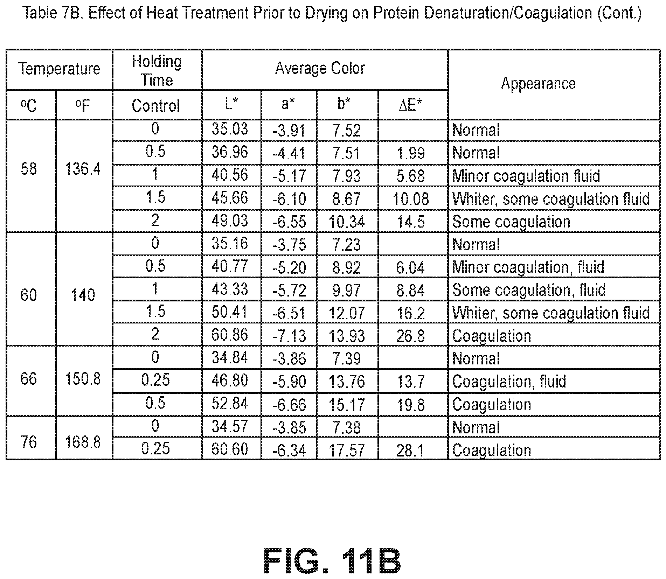

As previously discussed, the pasteurization or heat treatment prior to drying is an optional step if the starting material used for membrane filtration (i.e., demineralization, desugaring, concentration steps) has already received a heat treatment for microbial load reduction (for example, if the starting material is pasteurized liquid egg whites). Process 3 was used to deash/demineralize and desugar liquid egg whites and produce samples of concentrated liquid egg white isolate at 25% solids. Samples were heat treated at different conditions at bench using a water bath and results were validated in a pilot Microthermics Egg Pasteurizer. The goal was to determine optimal temperatures and holding times needed to reduce microbial load during Process B prior to drying. The goal was to prevent protein coagulation and denaturation. Severe protein coagulation can be easily visualized by color and texture changes in the liquid. Thus, color measurements were used to indicate the degree of coagulation and denaturation due to the heat treatment. The results are recorded in Tables 7A and 7B of FIGS. 11A-B. Results indicated that the preferred pasteurization/heat treatment conditions prior to drying include: up to 2 hours of holding time at less than 54°C (129.2°F) OR 0-5min holding time at 55-60°C (133.7-140°F). Heat treating the liquid egg white protein isolate at temperatures above 60°C (140°F) prior to drying may lead to protein denaturation and coagulation, especially at high solids (i.e., >20% solids).

Heat Stability of Dried Egg White Protein Isolate

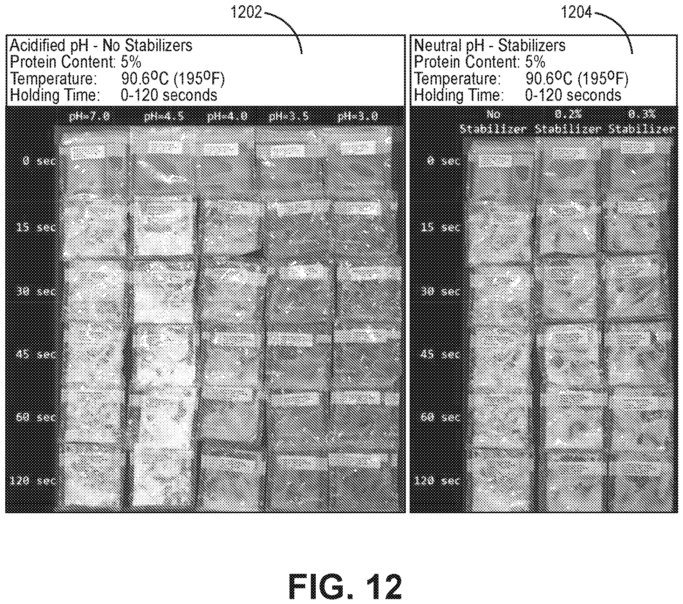

The heat stability of egg white protein isolate samples prepared according to the teachings herein was studied to determine suitability for food applications where heat stability is important, such as in ready-to-drink beverages. Samples of the protein isolate were dissolved in water to target 0-10% protein concentration in the solution. FIG. 12 is a photograph showing the results of this testing. The egg white protein isolate was allowed to hydrate for at least 3 hours. The pH of the solution was adjusted with lactic acid to pH 2-9. Treatments with and without protein stabilizers (e.g., 0.2-0.3% w/w of JOHA B50, JOHA KM2, and BEKAPLUS LS540) were studied. Solutions were packed in 30g sealed sampling bags and immersed in a water bath at 90.6°C for 0-120 seconds to simulate typical hot fill pasteurization conditions commonly used for acidified protein beverages. The samples 1202 shown in FIG. 12 were at an acidified pH with no added stabilizers. The samples 1204 in FIG. 12 were at a neutral pH with stabilizers added. The protein content of each of the tests 1202, 1204 was 5%.

As shown in samples 1202 of FIG. 12, 5% protein solutions were still fluid after heating and no visible coagulation was observed at a pH of less than 4.0 without addition of stabilizers. The samples prepared under these conditions were clearer than or as clear as the controls. Thus, the egg white protein isolate can be heat stable at pH below 4.0 without the need for stabilizers.

At a neutral pH, the samples 1204 of the egg white protein isolate did not appear to be heat stable, and coagulation was observed. However, stabilizers can be added to the solution to avoid protein aggregation. The solutions 1204 with added stabilizers changed to a white color after heating, but the resulting solutions were still fluid without visible spots of protein aggregation. The maximum recommended protein inclusion for beverage applications is 5-8% protein concentration (i.e., 5.5-9.5% egg white protein isolate powder). Higher protein inclusions may result in a clearer, non-opaque, gel (acidified pH) or creamy (neutral pH) texture.

It was observed that mild protein coagulation (i.e., some coagulated spots but still fluid after heating) can be reversible by mixing and/or homogenizing the solution after heating.

FIG. 12 shows that egg white protein isolate can be heat stable (no protein coagulation) at acidified pH. Stabilizers can be used to achieve heat stability at neutral pH.

Sensory Analysis of Dried Egg White Protein Isolate

A sensory study was conducted by the Department of Food Science and Human Nutrition of Iowa State University to compare the flavor profile of the egg white protein isolate with standard dried egg white and other protein isolates. A total of 10 trained sensory panelists were used for the study. Blind samples of reconstituted 10% protein solutions were ranked by the trained panel based on different flavor attributes on a 1-15 scale. Three replicates (three different production lots for each product) were evaluated for statistical analysis. Egg white samples were provided by two different suppliers. Samples of competitive proteins were selected from suppliers and brands with the best flavor profile currently in the market: Whey protein isolate (Provon 290 by Glanbia), soy protein isolate (Supro XT by DuPont and ISOPRO 996 SD by Shandong Sinoglory Health Food Co.), and milk protein isolate (MP90 by Milk Specialties).

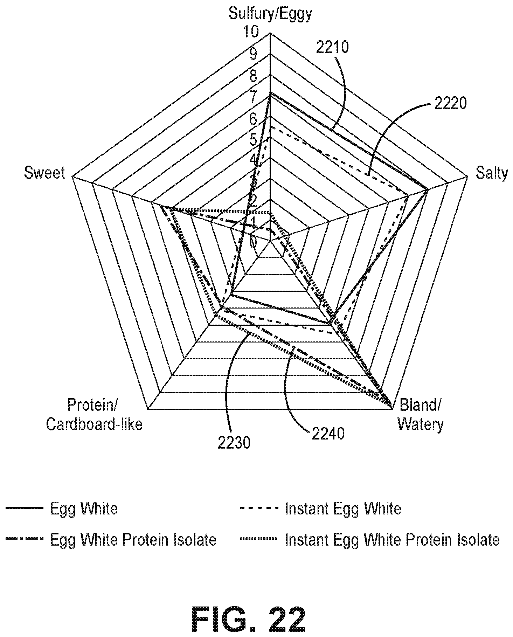

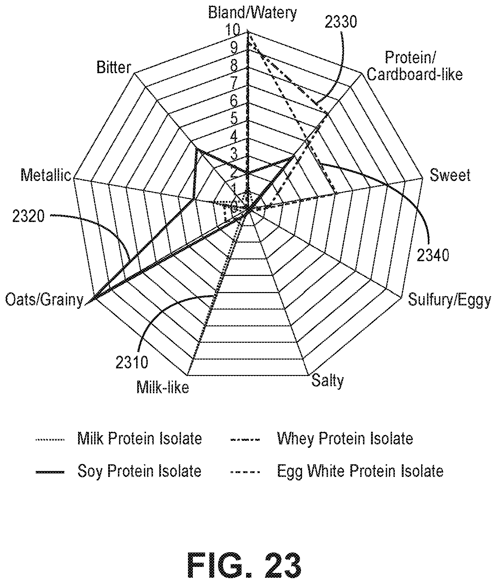

The results of this testing are summarized in FIGS. 22 and 23. FIG. 22 is a spider chart showing the flavor profile of dried egg white vs. egg white protein isolate as described by a trained panel (n=10). The study concluded that the egg white protein isolate has a significantly blander and watery-like flavor with intensified sweetness and lower egg flavor than standard egg whites (p-value > 0.05).

FIG. 23 is a spider chart showing the flavor profile of egg white protein isolate vs. other protein isolates as described by the trained panel (n=10). The panel found that egg white protein isolate has a similar flavor profile to whey protein isolate with intensified sweetness and lower metallic and oats/grainy-like notes (p-value > 0.05).

Study results agree with observations from previous blind triangle sensory tests conducted at the Rembrandt Foods R&D labs with untrained sensory panelists (n>30). Samples were prepared by dissolving 10g powder in 90mL water (10% solution). Three samples were compared:

1. Control: Standard Dried Egg Whites
2. Egg White Protein Isolate Process 3B (Trial #16)
3. Egg White Protein Isolate Process 2B (Trial#12)

Samples were not adjusted for final protein content; therefore the control had 8g protein and the egg white protein isolate sample contained 8.8g protein. 100% of the untrained panelists successfully identified the protein isolate sample (Trial #16) in a blind triangle test. 100% of the untrained panelists preferred the isolate over the control sample (standard egg whites). Panelists were asked to rank the sulfury/eggy/salty flavor profile in a 1-5 point scale. Control sample was ranked at 4.7±0.5 egg flavor intensity; whereas the protein isolate was ranked at 1.5±0.6. Typically samples containing higher protein would have more off-flavor, further showing the egg white protein isolate is deflavored.

Reduced Sodium Beverage Mix

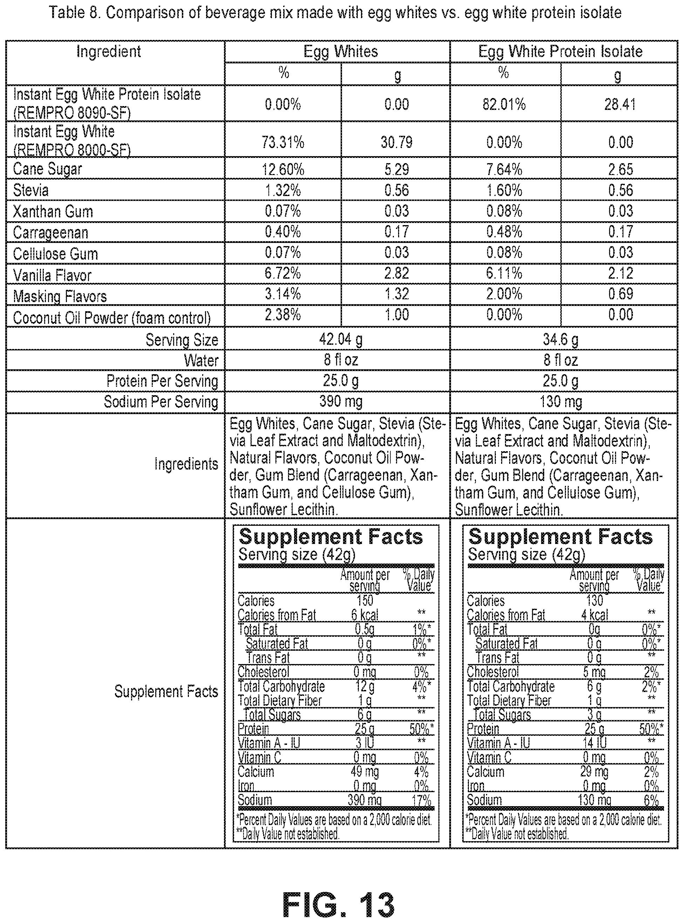

Turning to FIG. 13, formulations of vanilla flavored protein beverage mixes were developed with instant dried egg whites and instantized egg white protein isolate. Table 8 shows a comparison of the ingredients in each mix. The ratio of inclusion of ingredients was adjusted to target the same flavor profile and to provide 25g of protein per serving. The formulation with egg white protein isolate allowed for a 13% reduction in calories, a 67% reduction in sodium; a 17.5% reduction in serving size; a 7.7% reduction in egg usage to achieve same protein target; a 50% reduction in added sugar; a 25% reduction in vanilla flavor; a 47% reduction in masking flavors; and 100% reduction in foam control agents. Because the egg white protein isolate drink required a smaller amount of each ingredient compared to dried egg whites, the egg white protein isolate beverage mix would have an overall lower cost per serving. The reduction in ingredient amount may also potentially reduce the amount of packaging needed.

High Acid Ready-to-Drink Protein Beverage

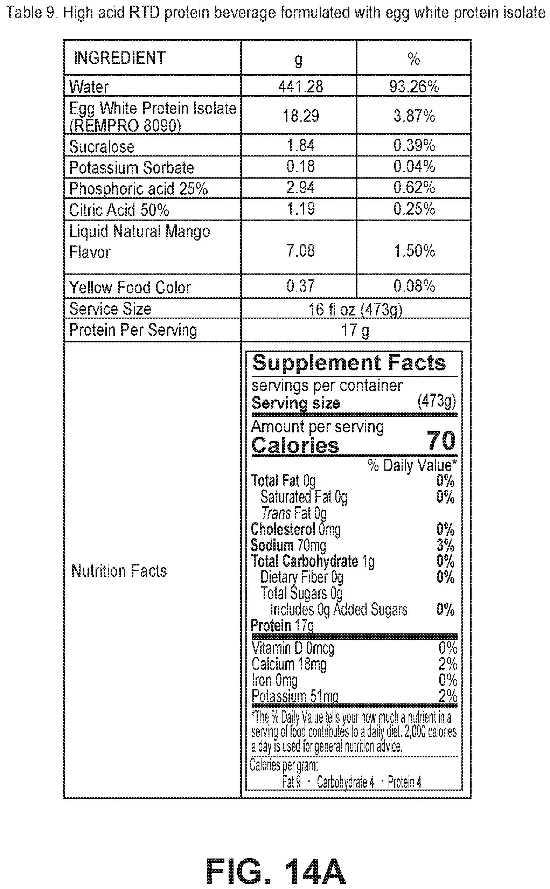

Turning to FIG. 14A, a high acid protein beverage was formulated with egg white protein isolate. Table 9 of FIG. 14A shows the ingredients included in the beverage. The target protein content was 3.5%, which is equivalent to about 4.0% egg white isolate powder. Dry ingredients were mixed and then dissolved in water. The protein was allowed to hydrate for 1 hour. Flavors, colors, and preservatives were then added. The pH was adjusted to 3.75 with 25% phosphoric acid, and further adjusted to pH 3.5 with 50% citric acid for flavor. The beverage was pasteurized under hot fill conditions (90.6°C (195°F) for 45 seconds) and immediately immersed in ice-water mix for cooling.
The viscosity of the beverage before and after pasteurization was measured using a Brookfield LVT viscometer, spindle 1 and speed 60 rpm at 5°C. The sample size was set to 400 grams. The viscosity readings before and after pasteurization were 13.27 and 137.37 cP, respectively. Although there was an increase in viscosity, the beverage remained liquid and no visible indicators of protein coagulation were observed. Thus, egg white protein isolate can be used in high acid protein beverages and exposed to typical hot fill pasteurization conditions without severe protein coagulation.

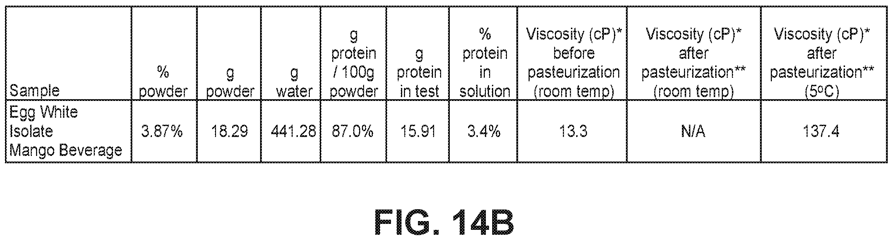

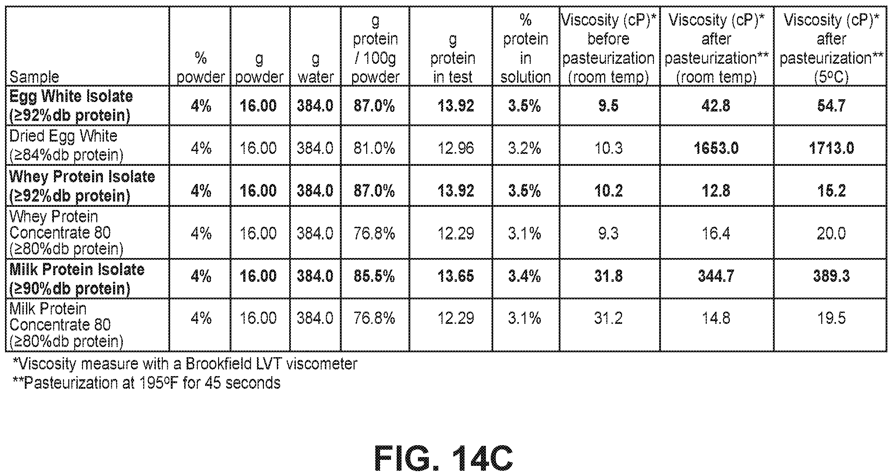

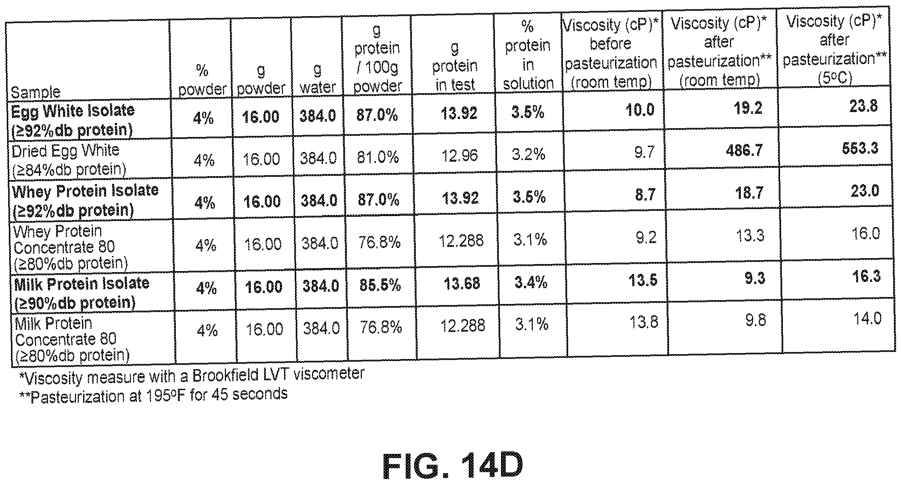

FIG. 14B shows the viscosity of the beverage of Fig. 14A, having a viscosity after pasteurization of 137.4 cP. FIG. 14C and 14D show viscosities of protein solutions with (Fig. 14C) and without (Fig. 14D) pH adjustment. Viscosity before and after pasteurization at room temp was measured as well as after pasteurization at refrigerated temperatures. For these two formulations 4 percent powder protein solutions were mixed with water and allowed to hydrate for 1 hour. The formulation for FIG. 14C had its pH adjusted to 3.5 with phosphoric acid as this is a typical pH for acidic beverages. The viscosity was measured at room temperature before pasteurization, the mixture was then pasteurized at 90.6°C (195 °F) for 45 seconds, then cooled in an ice bath, and viscosity again measured at room temperature as well as 5 °C.
Egg white isolate was less viscous than milk protein isolate (MPI) and milk protein concentrate (MPC) prior to pasteurization and similar in viscosity to dried egg white, whey protein isolate (WPI) and whey protein concentrate (WPC). Egg white isolate was less viscous than MPI and dried egg white and slightly more viscous than WPI, WPC, and MPC after pasteurization but fluid like milk. Dried egg white after pasteurization had high viscosity (1500-2000cP) with a texture similar to a yogurt. Egg white isolate at neutral pH required homogenization after pasteurization. At neutral pH all samples had low viscosity except dried egg white. Dried egg white viscosity at neutral pH was similar to MPI at acidic pH.

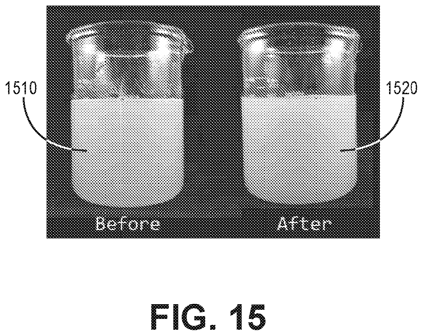

FIG. 15 is a photographic comparison of the beverage form FIG. 14A before and after hot fill pasteurization.
FIG 14A-D and FIG 15, illustrate that the egg isolate produced in this disclosure can be used in high acid or neutral protein beverages and exposed to typical hot fill pasteurization conditions without severe protein coagulation at protein concentrations of at least 3.5%. Under neutral pH conditions, it is recommended to use stabilizers and/or phosphates to help with protein stabilization and it is recommended to homogenize the beverage after pasteurization.

High Protein Bakery Goods

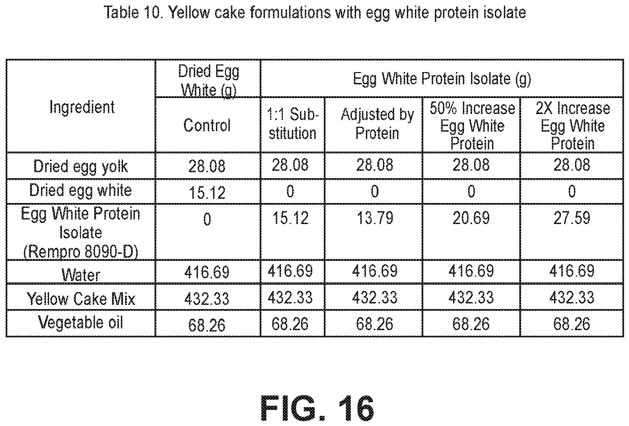

Turning to FIGS. 16-19, samples of egg white protein isolates were used as a substitute for dried egg white in different bakery applications including yellow cakes, muffins, cookies, pancakes, crepes, blintzes, waffles, and other baked goods. Different levels of egg white protein isolate were tested in the formulas, including a 1:1 substitution for egg whites and adjusted usage by protein content. Also, formulations with an additional 50% and two times the original egg white protein content were tested to illustrate application of the product in protein-fortified baked goods.
Examples of formulations with yellow cake were listed in Table 10 of FIG. 16. Dry ingredients were manually blended and mixed with the liquid ingredients in a Kitchenaid mixer with paddle attachment on speed 1 for 15 seconds, then speed 2 for 15 seconds. The bowl was manually scraped to remove accumulation of batter on the sides of the bowl. Then the batter was mixed on speed 5 for 2 more minutes. 600g of batter was placed into a 22.9 cm (9-inch) round cake pan lined with parchment paper on the bottom. The cakes were baked for 33 minutes at 176.7°C (350°F) and then removed from the oven and cooled on wire rack.

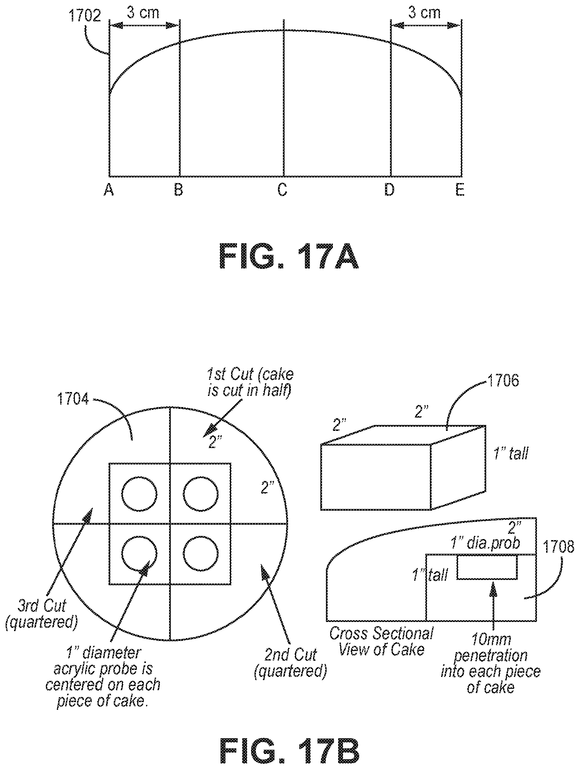

Cake heights were measured according to the AACC international method 10-91.01. This measurement scheme is detailed in FIGS. 17A and 17B. Measurements were used to estimate volume index (B+C+D), symmetry index (2C-B-D) and uniformity index (B-D). Cake hardness, springiness, and gumminess were analyzed following the AIB standard method for cake texture analysis. Hardness, cohesiveness, and springiness were measured using a texture analyzer (TA.XTPlus, Texture Technologies Corporation, NY) at 10mm depth (2mm/s) and residual hardness after 3 seconds hold time. The probe used for measurement was a 2.5 cm (1 inch) diameter cylindrical probe (TA-11, acrylic, 35mm tall) using a 5kg load cell.

FIG. 17A shows the measurement of cake heights according to AACC 10-91.01. FIG. 17B shows the cake cutting pattern used to obtain samples for texture analysis by Rhodia Corp & Texture Technologies Corp., USA.

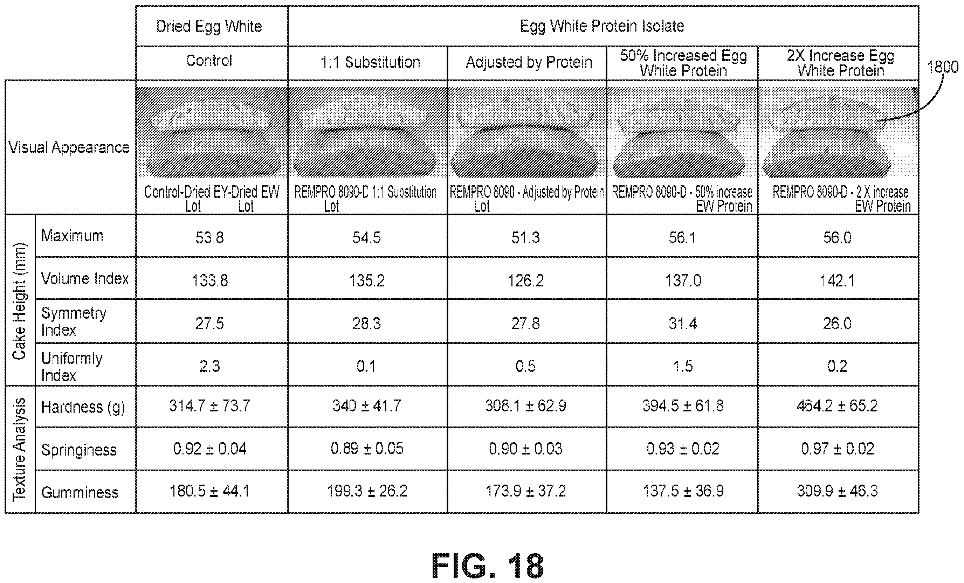

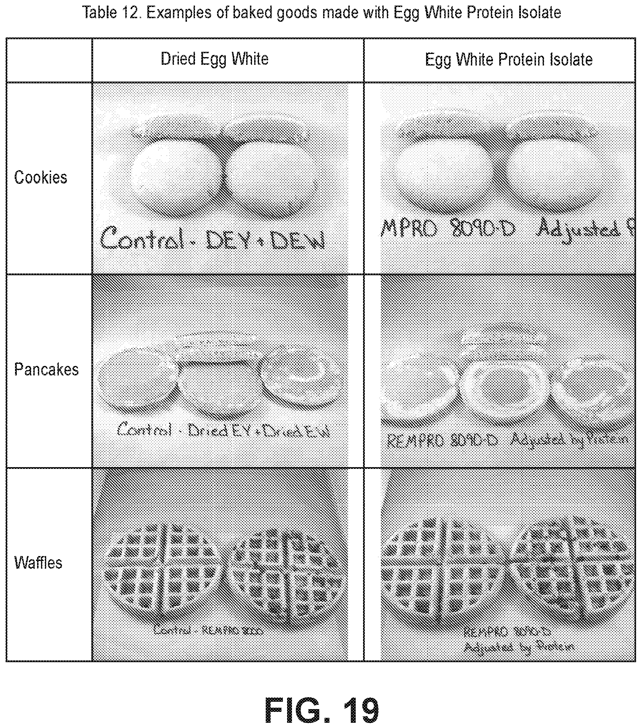

As can be seen in the photographs in the table of FIG. 18, all cakes were similar in appearance. All of the cakes were also similar in taste. Cakes made with the equal (1:1 substitution) or increased amount of egg white protein isolate (50% and 2X increase) had increased volume index and were more uniform in shape than the controls. Cakes with egg whites and egg white protein isolate adjusted by protein content had similar cake height and texture profile. As expected, hardness and gumminess slightly increased with increased protein content, but no significant differences were observed during sensory analysis. However, cakes with 2X protein content had a slightly increased dry mouth feel. Similar results were observed with other bakery applications. FIG. 19 shows photographs of baked goods made with egg white protein isolate compared to baked goods made with dried egg white. In each case, the results were comparable to the controls. Formulas with increased protein content resulted in firmer texture and/or were crispier than the controls.

Nutrition Bars

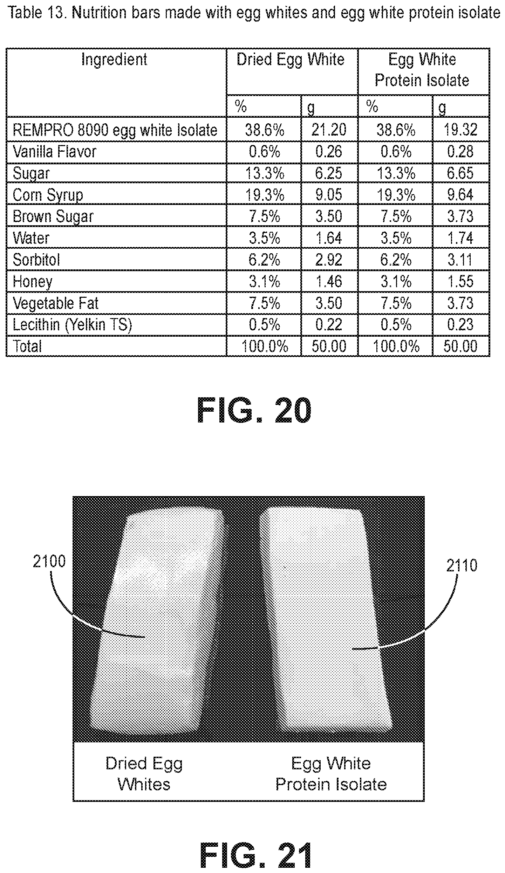

Protein bars were made with egg whites and egg white protein isolate using the formulas presented in Table 13 of FIG. 20. Inclusion of egg white protein isolate was adjusted to match protein content of control formulation with egg whites. Liquid ingredients except vegetable fat and lecithin were mixed manually and boiled to 70% solids. Vegetable fat was added to the boiled syrup. Then egg protein and flavors were dry blended and placed in a Hobart mixer. Warm syrup slurry was slowly poured into the dry mix and the mixture was blended until obtaining a homogeneous dough. The resulting dough was kneaded by hand and rolled to 1.3 cm (1/2") thickness. The roll was cooled overnight and later cut to the required size (9.5 x 3.9 x 1.4 cm). The resulting protein bars with egg white protein isolate were firmer, whiter in color, and experienced less browning during shelf life compared to the control with dried egg white. FIG. 21 is a photographic comparison of the nutrition bar 2100 containing dried egg whites and the nutrition bar 2110 containing egg white protein isolate.

In certain instances, this product has the following characteristics:

1. Minimum 92% dry basis protein content
2. Mild / neutral flavor as compared to standard dried egg whites (deflavored product)
3. Less foaming characteristics as compared to standard dried egg whites
4. Better / less color (whiter; less yellow) as compared to standard dried egg whites (dry powder color and as reconstituted liquid)
5. Better heat stability in final product processing as compared to standard dried egg whites (e.g. less coagulation of the egg white proteins; lower gelling characteristics)
6. Egg protein isolates produced using Process B have the added advantages of eliminating lengthy pasteurization by hot room method (7-14 days processing).
7. Egg protein isolates produced using Process B that are instantized have the added processing advantage of eliminating the intermediate packaging step, thus reducing waste.

Use of egg protein isolates instead of standard dried egg whites in final food products can have the following benefits:

1. Increase protein content in finished goods by use of egg protein isolate instead of standard dried egg white (e.g., baked goods, protein bars, protein dry beverage blends and ready-to-drink beverages)
Example:

10g of egg protein isolate = 8.5-9.0g protein per serving versus

10g of standard dried egg whites = 8.0g protein per serving

2. Use less amount (%) of egg protein isolate to achieve a specific protein per serving target allowing extra room for additional ingredients as compared to standard dried egg white (e.g., flavors, texture modifiers, other functional ingredients) Example: If a product needs 10g protein per serving: the product developer would need a maximum of 11.7g of egg white protein isolate but at least 12.5 of standard dried egg whites
3. Produce products such as protein beverages or bars with a milder egg flavor
4. Can be used in beverage processing with less need for antifoam ingredient addition.

In some embodiments, the starting material may contain both egg white and egg yolk or may be liquid whole egg material (2400) as shown in FIG. 24. In this option, the liquid egg mixture containing both egg white and egg yolk 2410 is defatted using microfiltration 2420 via U.S. Patent No. 8,916,156, entitled "ISOLATED EGG PROTEIN AND EGG LIPID MATERIALS, AND METHODS FOR PRODUCING THE SAME" or other methods. The permeate 2450 can then be utilized in the deflavoring processes 2460 outlined in this application. The concentrate 2430 can optionally be dried 2440.

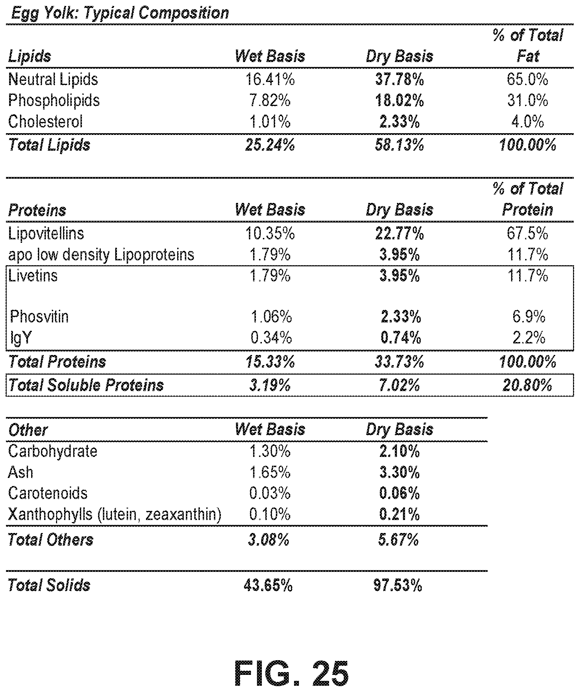

The composition (% egg white protein to % soluble egg yolk protein) will vary depending on the amount of egg yolk to egg white in the starting material. Egg yolk (see FIG 25) has different proteins than found in egg white (see FIG 3) and approximately 19 to 23% of the total proteins found in egg yolk are soluble in water. The soluble proteins found in egg yolk include (livetins, Immunoglobulin Y (IgY), and phosvitin).

Phosvitin contains 12% of nitrogen and 10% of phosphorus, and has a molecular weight of 35 kDa (Mecham and Olcott, 1949; Powrie and Nakai, 1986). Phosvitin contains 217 amino acid residues, of which 123 are serine (Byrne et al, 1984). Of the 123 serine residues, 118 are phosphorylated, making it the most highly phosphorylated protein in nature (Byrne et al, 1984; Clark, 1985; Grogan et al, 1990). Due to the large amount of negatively charged phosphoserine residues, phosvitin exhibits strong metal chelating ability, and is believed to provide metal ions during embryonic development (Taborsky, 1983). Phosvitin exhibits numerous other biological properties including antioxidant and anti-bacterial abilities, and excellent emulsion-stabilizing properties (Albright et al, 1984; Chung and Ferrier, 1992; Nakamura et al, 1998; Sattar Khan et al, 2000).

IgY is a key egg immune system protein. IgY antibodies could help to replenish the antibodies depleted by the body. Nonspecific IgY antibodies could be used as a generic supplement ingredient into branded food and beverage products, health products and supplements. For performance athletes, research suggests that your immune system can become weakened through overtraining; thus, adding a product high in IgY could help reduce downtime by replenishing antibodies. In addition to helping balance and support the immune system, other studies have shown that IgY can help maintain digestive-tract health.

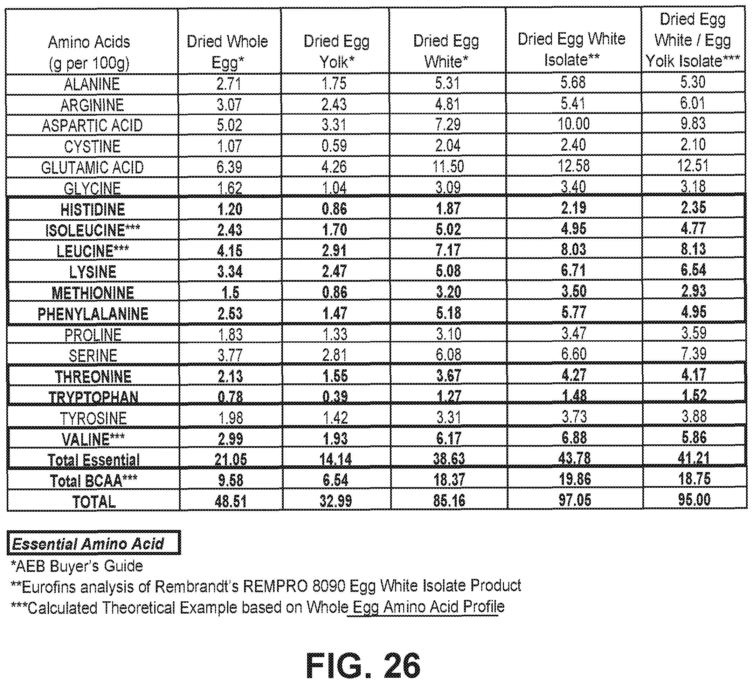

In addition to looking at the types of proteins within egg yolk and egg whites, we can look at the amino acid profile of proteins to determine their nutritional value. FIG 26 outlines the amino acid composition of dried whole egg, egg yolk, and egg white (source: *AEB Buyer's Guide*) as well as the Dried Egg Protein Isolate product outlined in this invention (source: *Eurofins analytical results*). Theoretically, if the product mix starting material included both egg white and egg yolk, the amino acid composition would be more similar to a whole egg-type isolate product (see last column for theoretical calculation). Egg protein isolates are complete proteins (containing all essential amino acids in sufficient quantity to have a PDCAAS score of 1).

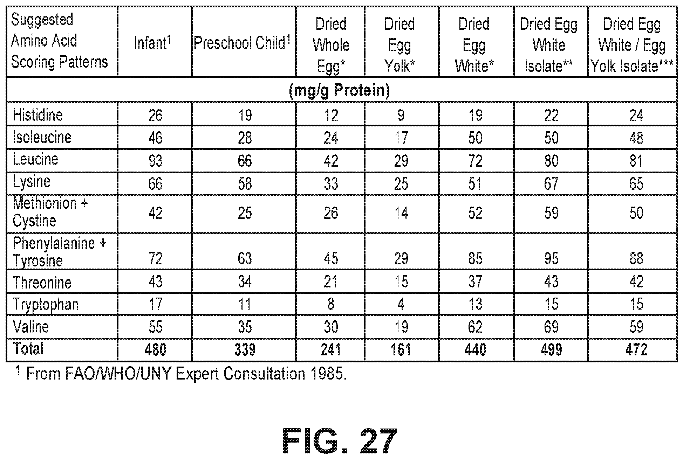

In 1989, a joint FAO/WHO Expert Consultation on Protein Quality Evaluation (FAO/WHO 1990) concluded that protein quality could be assessed adequately by expressing the content of the first limiting essential amino acid of the test protein as a percentage of the content of the same amino acid in a reference pattern of essential amino acids. This reference pattern was based on the essential amino acid requirements of the preschool-age child as published in 1985 (FAO/WHO/UNU 1985). As shown in FIG 27, the isolates described herein, meet or exceed the needs outlined by the FAO/WHO for preschool aged children.

It should be noted that, as used in this specification and the appended claims, the singular forms "a," "an," and "the" include plural references unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration to. The phrase "configured" can be used interchangeably with other similar phrases such as arranged and configured, constructed and arranged, constructed, manufactured and arranged, and the like.

Aspects have been described with reference to various specific and preferred embodiments and techniques.

The embodiments described herein are not intended to be exhaustive or to limit the invention to the precise forms disclosed in the following detailed description. Rather, the embodiments are chosen and described so that others skilled in the art can appreciate and understand the principles and practices.

The publications and patents disclosed herein are provided solely for their disclosure. Nothing herein is to be construed as an admission that the inventors are not entitled to antedate any publication and/or patent, including any publication and/or patent cited herein.

**Claims**

1. A method of making a deflavored egg protein isolate, the method comprising:

    providing liquid egg;
    deashing the liquid egg;
    concentrating the liquid egg; and
    desugaring the liquid egg.

2. The method of making a deflavored egg protein isolate of any of claims 1 and 3-8, wherein the deashing step occurs before the concentrating or desugaring step; where the desugaring step occurs before the deashing or concentrating step; where the concentrating step occurs before the deashing or desugaring step; or wherein one or more of the deashing, concentrating, and desugaring steps are simultaneously performed, optionally wherein the deashing and desugaring are accomplished simultaneously by separation using a membrane of 3,000 to 20,000Da.

3. The method of any of claims 1, 2 and 4-8, wherein deashing is accomplished:
   by separation of the minerals from the egg proteins using a nanofiltration or ultrafiltration membrane, optionally a nanofiltration or ultrafiltration membrane of:

    (a) 300 to 1,000 daltons;
    (b) greater than 3,000 daltons; and/or
    (c) 1,000 to 5,000 daltons.

4. The method of any of claims 1-3 and 5-8, wherein removal of the sugars comprises filtration, and/or yeast fermentation or glucose oxidase enzyme reaction.

5. The method of any of claims 1-4 and 6-8 , wherein the egg product:

    (a) has an ash content below 3 percent; and/or
    (b) has a gel strength of less than 200g.

6. The method of any of claims 1-5 and 7-8, further comprising diafiltration, wherein:

    (a) the volume of water used is 2 to 6 diafiltration volumes, optionally 4 to 6 diafiltration volumes are used; and/or
    (b) the diafiltration is continuous; or
    (c) the diafiltration is discontinuous.

7. The method of any of claims 1-6 and -8, wherein diafiltration reduces the mineral content of the liquid egg by at least 50 percent, optionally by at least 60 percent or by at least 70 percent.

8. The method of any of claims 1-7, wherein the deflavored egg protein isolate has a color differentiation of greater than 6 in a 10% solution when compared to dried egg white, wherein color differential is measured by

$$\Delta E_{ab}^* = \sqrt{(L_2^* - L_1^*)^2 + (a_2^* - a_1^*)^2 + (b_2^* - b_1^*)^2}$$

9. A deflavored egg protein isolate composition made from the method of claim 1, optionally wherein the mineral content of the isolate is less than 50 percent of the mineral content of dried egg albumen; wherein the sugar content of the isolate is less than 50 percent of the sugar content of the starting liquid egg; wherein the sodium content of the isolate is less than 50 percent of the sodium content of the starting liquid egg; and/or wherein the deflavored egg protein isolate has a color differentiation of greater than 6 in a 10% solution when compared to dried egg white, wherein color differential is measured by

$$\Delta E_{ab}^* = \sqrt{(L_2^* - L_1^*)^2 + (a_2^* - a_1^*)^2 + (b_2^* - b_1^*)^2}$$

10. A method of preparing a high-acid beverage, the method comprising:

Providing deflavored egg protein isolate, optionally wherein the deflavored egg protein isolate has a dry basis protein content greater than or equal to 92%;
hydrating the deflavored egg protein isolate in water to produce the beverage, optionally wherein the deflavored egg protein isolate is hydrated in water for between 30 and 90 minutes; and
adjusting the pH of the beverage to between 3 and 4, optionally wherein adjusting the pH includes adding one of phosphoric acid and citric acid to the beverage.

11. The method of claim 10 , further comprising:

(a) pasteurizing the liquid under hot fill conditions after the step of adjusting the pH, wherein there are no visible indicators of protein coagulation after hot fill pasteurization; optionally wherein pasteurization includes, after adjusting the pH of the beverage, heating the beverage to 91°C (195°F) for 45 seconds; and/or
(b) immediately cooling the beverage after heating the beverage to 91°C (195°F) for 45 seconds.

12. A high acid beverage comprising:

water;
deflavored egg protein isolate, optionally wherein the deflavored egg protein isolate has a protein content greater than or equal to 92% dry basis protein and/or the beverage contains between about 3% and 4% protein by weight; and
an acid added to the beverage to alter the pH of the beverage, optionally wherein the acid is one of phosphoric acid and citric acid and/or the pH of the beverage is less than or equal to 4.0.

13. The beverage of any of claims 12, 14 and 15, wherein the beverage is pasteurized under hot fill conditions, and wherein the beverage does not exhibit visual indicators of protein coagulation after pasteurization.

14. The beverage of any of claims 12, 13 and 15, wherein the viscosity of the beverage is between 100 and 200 cP when measured using a Brookfield LVT viscometer, spindle 1 and speed 60 rpm at 5°C.

15. The beverage of any of claims 12-14, wherein the sodium content of the beverage is less than 100 mg per 473 g of the beverage and the protein content is at least 10 g per 473 g of the beverage.


**Patentansprüche**

1. Verfahren zum Erzeugen eines geschmacksentzogenen Eiproteinisolates, wobei das Verfahren Folgendes umfasst:

Bereitstellen eines Flüssigeies;
Entaschen des Flüssigeies;
Konzentrieren des Flüssigeies; und
Entzuckern des Flüssigeies.

2. Verfahren zum Erzeugen eines geschmacksentzogenen Eiproteinisolates nach einem der Ansprüche 1 und 3-8, wobei der Entaschungsschritt vor dem Konzentrierungs- oder Entzuckerungsschritt erfolgt; wobei der Entzuckerungsschritt vor dem Entaschungs- oder Konzentrierungsschritt erfolgt; wobei der Konzentrierungsschritt vor dem Entaschungs- oder Entzuckerungsschritt erfolgt; oder
wobei der Entaschungs-, Konzentrierungs- und/oder Entzuckerungsschritt gleichzeitig durchgeführt werden, optional wobei das Entaschen und Entzuckern gleichzeitig durch eine Trennung unter Verwendung einer Membran von 3.000 bis 20.000 Da ausgeführt werden.

3. Verfahren nach einem der Ansprüche 1, 2 und 4-8, wobei das Entaschen ausgeführt wird:
durch die Trennung der Mineralstoffe von den Eiproteinen unter Verwendung einer Nanofiltrations- oder Ultrafiltrationsmembran, optional einer Nanofiltrations- oder Ultrafiltrationsmembran von:

   (a) 300 bis 1.000 Dalton;
   (b) größer als 3.000 Dalton; und/oder
   (c) 1.000 bis 5.000 Dalton.

4. Verfahren nach einem der Ansprüche 1-3 und 5-8, wobei ein Entfernen der Zucker Filtration und/oder Hefefermentation oder eine Glucoseoxidaseenzymreaktion umfasst.

5. Verfahren nach einem der Ansprüche 1-4 und 6-8, wobei das Eiprodukt:

   (a) einen Aschegehalt unter 3 Prozent aufweist; und/oder
   (b) eine Gelfestigkeit von weniger als 200 g aufweist.

6. Verfahren nach einem der Ansprüche 1-5 und 7-8, das ferner eine Diafiltration umfasst, wobei:

   (a) das Wasservolumen, das verwendet wird, 2 bis 6 Diafiltrationsvolumen beträgt, optional 4 bis 6 Diafiltrationsvolumen verwendet werden; und/oder
   (b) die Diafiltration kontinuierlich ist; oder
   (c) die Diafiltration diskontinuierlich ist.

7. Verfahren nach einem der Ansprüche 1-6 und -8, wobei die Diafiltration den Mineralstoffgehalt des Flüssigeies um wenigstens 50 Prozent, optional um wenigstens 60 Prozent oder um wenigstens 70 Prozent reduziert.

8. Verfahren nach einem der Ansprüche 1-7, wobei das geschmacksentzogene Eiproteinisolat eine Farbdifferenzierung von größer als 6 in einer 10%igen Lösung im Vergleich zu getrocknetem Eiweiß aufweist, wobei die Farbdifferenzierung durch Folgendes gemessen wird

$$\Delta E_{ab}^* = \sqrt{(L_2^* - L_1^*)^2 + (a_2^* - a_1^*)^2 + (b_2^* - b_1^*)^2}$$

9. Zusammensetzung eines geschmacksentzogenen Eiproteinisolates, das aus dem Verfahren nach Anspruch 1 erzeugt wird, optional wobei der Mineralstoffgehalt des Isolates weniger als 50 Prozent des Mineralstoffgehaltes von getrocknetem Eialbumen beträgt; wobei der Zuckergehalt des Isolates weniger als 50 Prozent des Zuckergehaltes des Ausgangsflüssigeies beträgt; wobei der Natriumgehalt des Isolates weniger als 50 Prozent des Natriumgehaltes des Ausgangsflüssigeies beträgt; und/oder wobei das geschmacksentzogene Eiproteinisolat eine Farbdifferenzierung von größer als 6 in einer 10%igen Lösung im Vergleich zu getrocknetem Eiweiß aufweist, wobei die Farbdifferenzierung durch Folgendes gemessen wird

$$\Delta E_{ab}^* = \sqrt{(L_2^* - L_1^*)^2 + (a_2^* - a_1^*)^2 + (b_2^* - b_1^*)^2}$$

10. Verfahren zum Herstellen eines hochsäurehaltigen Getränkes, wobei das Verfahren Folgendes umfasst:

   Bereitstellen des geschmacksentzogenen Eiproteinisolates, wobei das geschmacksentzogene Eiproteinisolat einen Trockenmasseproteingehalt von größer als oder gleich 92 % aufweist;
   Hydratisieren des geschmacksentzogenen Eiproteinisolates in Wasser, um das Getränk zu produzieren, optional wobei das geschmacksentzogene Eiproteinisolat in Wasser zwischen 30 und 90 Minuten lang hydratisiert wird; und
   Einstellen des pH-Wertes des Getränkes auf zwischen 3 und 4, optional wobei das Einstellen des pH-Wertes ein Zusetzen von Phosphorsäure oder Citronensäure zu dem Getränk beinhaltet.

11. Verfahren nach Anspruch 10, das ferner Folgendes umfasst:

   (a) Pasteurisieren der Flüssigkeit unter Heißabfüllbedingungen nach dem Schritt des Einstellens des pH-Wertes, wobei es keine sichtbaren Indikatoren der Proteincoagulation nach der Heißabfüllpasteurisierung gibt; optional wobei die Pasteurisierung nach dem Einstellen des pH-Wertes des Getränkes ein Erhitzen des Getränkes 45 Sekunden lang auf 91 °C (195 °F) beinhaltet; und/oder

(b) sofortiges Abkühlen des Getränkes, nachdem das Getränk 45 Sekunden lang auf 91 °C (195 °F) erhitzt wurde.

**12.** Hochsäurehaltiges Getränk, das Folgendes umfasst:

Wasser;

geschmackentzogenes Eiproteinisolat, optional wobei das geschmacksentzogene Eiproteinisolat einen Proteingehalt von größer als oder gleich 92 % Trockenmasseprotein aufweist und/oder das Getränk zwischen etwa 3 Gew.-% und 4 Gew.-% Protein enthält; und

eine Säure, die dem Getränk zugesetzt wird, um den pH-Wert des Getränkes zu verändern, optional wobei die Säure Phosphorsäure oder Citronensäure ist und/oder der pH-Wert des Getränkes kleiner als oder gleich 4,0 ist.

**13.** Getränk nach einem der Ansprüche 12, 14 und 15, wobei das Getränk unter Heißabfüllbedingungen pasteurisiert wird und wobei das Getränk nach der Pasteurisierung keine visuellen Indikatoren der Proteincoagulation zeigt.

**14.** Getränk nach einem der Ansprüche 12, 13 und 15, wobei die Viskosität des Getränkes zwischen 100 und 200 cP liegt, wenn sie unter Verwendung eines Brookfield LVT-Viskosimeters, einer Spindel 1 und einer Geschwindigkeit 60 U/min bei 5 °C gemessen wird.

**15.** Getränk nach einem der Ansprüche 12-14, wobei der Natriumgehalt des Getränkes weniger als 100 mg pro 473 g des Getränkes beträgt und der Proteingehalt wenigstens 10 g pro 473 g des Getränkes beträgt.

## Revendications

**1.** Procédé de fabrication d'un isolat de protéines d'œuf désaromatisé, le procédé comprenant :

la fourniture de l'œuf liquide ;
le décendrage de l'œuf liquide ;
la concentration de l'œuf liquide ; et
le désucrage de l'œuf liquide.

**2.** Procédé de fabrication d'un isolat de protéines d'œuf désaromatisé selon l'une quelconque des revendications 1 et 3 à 8, dans lequel l'étape de décendrage a lieu avant l'étape de concentration ou de désucrage ; où l'étape de désucrage a lieu avant l'étape de décendrage ou de concentration ; où l'étape de concentration a lieu avant l'étape de décendrage ou de désucrage ; ou

dans lequel une ou plusieurs des étapes de décendrage, de concentration et de désucrage sont effectuées simultanément,

éventuellement dans lequel le décendrage et le désucrage sont accomplis simultanément par séparation à l'aide d'une membrane de 3 000 à 20 000 Da.

**3.** Procédé selon l'une quelconque des revendications 1, 2 et 4 à 8, dans lequel le décendrage est accompli :
par séparation des minéraux des protéines d'œuf à l'aide d'une membrane de nanofiltration ou d'ultrafiltration, éventuellement d'une membrane de nanofiltration ou d'ultrafiltration :

(a) de 300 à 1 000 daltons ;
(b) supérieure à 3 000 daltons ; et/ou
(c) de 1 000 à 5 000 daltons.

**4.** Procédé selon l'une quelconque des revendications 1 à 3 et 5 à 8, dans lequel l'élimination des sucres comprend une filtration et/ou une fermentation de levure ou une réaction enzymatique de glucose oxydase.

**5.** Procédé selon l'une quelconque des revendications 1 à 4 et 6 à 8, dans lequel l'ovoproduit :

(a) a une teneur en cendres en dessous de 3 % ; et/ou
(b) a une force de gel inférieure à 200 g.

**6.** Procédé selon l'une quelconque des revendications 1 à 5 et 7 à 8, comprenant en outre une diafiltration, dans lequel :

(a) le volume d'eau utilisé est de 2 à 6 volumes de diafiltration, éventuellement 4 à 6 volumes de diafiltration sont utilisés ; et/ou
(b) la diafiltration est continue ; ou
(c) la diafiltration est discontinue.

**7.** Procédé selon l'une quelconque des revendications 1 à 6 et à 8, dans lequel la diafiltration réduit la teneur en minéraux de l'œuf liquide d'au moins 50 pour cent, éventuellement d'au moins 60 pour cent ou d'au moins 70 pour cent.

**8.** Procédé selon l'une quelconque des revendications 1 à 7, dans lequel l'isolat de protéines d'œuf désaromatisé a une différenciation de couleur supérieure à 6 dans une solution à 10 % par rapport à un blanc d'œuf séché, dans lequel la différence de couleur est mesurée par

$$\Delta E_{ab}^* = \sqrt{(L_2^* - L_1^*)^2 + (a_2^* - a_1^*)^2 + (b_2^* - b_1^*)^2}$$

**9.** Composition d'isolat de protéines d'œuf désaromatisé fabriquée à partir du procédé de la revendication 1, éventuellement dans laquelle la teneur en minéraux de l'isolat est inférieure à 50 pour cent de la teneur en minéraux de l'albumine d'œuf séché ; dans laquelle la teneur en sucre de l'isolat est inférieure à 50 pour cent de la teneur en sucre de l'œuf liquide de départ ; dans laquelle la teneur en sodium de l'isolat est inférieure à 50 pour cent de la teneur en sodium de l'œuf liquide de départ ; et/ou dans laquelle l'isolat de protéines d'œuf désaromatisé a une différenciation de couleur supérieure à 6 dans une solution à 10 % par rapport au blanc d'œuf séché, dans laquelle la différence de couleur est mesurée par

$$\Delta E_{ab}^* = \sqrt{(L_2^* - L_1^*)^2 + (a_2^* - a_1^*)^2 + (b_2^* - b_1^*)^2}$$

**10.** Procédé de préparation d'une boisson à haute teneur en acide, le procédé comprenant :

la fourniture d'un isolat de protéines d'œuf désaromatisé, éventuellement dans lequel l'isolat de protéines d'œuf désaromatisé a une teneur en protéines sur base sèche supérieure ou égale à 92 % ;
l'hydratation de l'isolat de protéines d'œuf désaromatisé dans de l'eau pour produire la boisson, éventuellement dans lequel l'isolat de protéines d'œuf désaromatisé est hydraté dans de l'eau pendant 30 à 90 minutes ; et
l'ajustement du pH de la boisson entre 3 et 4, éventuellement dans lequel l'ajustement du pH comporte l'ajout d'un acide parmi l'acide phosphorique et l'acide citrique à la boisson.

**11.** Procédé selon la revendication 10, comprenant en outre :

(a) la pasteurisation du liquide dans des conditions d'embouteillage à chaud après l'étape d'ajustement du pH, dans lequel il n'y a pas d'indicateurs visibles de coagulation des protéines après la pasteurisation par embouteillage à chaud ; éventuellement dans lequel la pasteurisation comporte, après ajustement du pH de la boisson, le chauffage de la boisson à 91 °C pendant 45 secondes ; et/ou
(b) le refroidissement immédiat de la boisson après avoir chauffé la boisson à 91 °C pendant 45 secondes.

**12.** Boisson très acide comprenant :

de l'eau ;
un isolat de protéines d'œuf désaromatisé, éventuellement dans lequel l'isolat de protéines d'œuf désaromatisé a une teneur en protéines supérieure ou égale à 92 % de protéines sur base sèche et/ou la boisson contient entre environ 3 % et 4 % de protéines en poids ; et
un acide ajouté à la boisson pour modifier le pH de la boisson, éventuellement dans lequel l'acide est un acide parmi l'acide phosphorique et l'acide citrique et/ou le pH de la boisson est inférieur ou égal à 4,0.

**13.** Boisson selon l'une quelconque des revendications 12, 14 et 15, dans laquelle la boisson est pasteurisée dans des conditions d'embouteillage à chaud, et dans laquelle la boisson ne présente pas d'indicateurs visuels de coagulation des protéines après pasteurisation.

**14.** Boisson selon l'une quelconque des revendications 12, 13 et 15, dans laquelle la viscosité de la boisson est comprise entre 100 et 200 cP lorsqu'elle est mesurée à l'aide d'un viscosimètre Brookfield LVT, broche 1 et vitesse de 60 tr/min à 5 °C.

**15.** Boisson selon l'une quelconque des revendications 12 à 14, dans laquelle la teneur en sodium de la boisson est inférieure à 100 mg pour 473 g de boisson et la teneur en protéines est d'au moins 10 g pour 473 g de boisson.

**FIG. 1**

**FIG. 2**

Table 1. Major proteins in egg whites

| Protein | % Protein in Egg White | Isoelectric Point | Molecular Weight (kDa) |
|---|---|---|---|
| Ovalbumin | 54% | 4.5-5.3 | 42.4-45 |
| Ovotransferrin | 12% | 6.1-6.7 | 75-85 |
| Ovomucoid | 11% | 4.1-5.3 | 28-43.1 |
| Ovomucin | 3.5% | 4.5-5.0 | 5,500-8,300 |
| Lysozyme | 3.4% | 10.7 | 14.3-15 |
| G2 globulin | 4.0% | 5.5 | 30-45 |
| Ovoinhibitor | 1.5% | 5.1-6.4 | 49-69.5 |
| Ovoglycoprotein | 1.0% | 3.9-5.4 | 24.4-43.1 |
| Ovoflavoprotein | 0.8% | 4-5.2 | 32-40 |
| Ovomacroglobulin | 0.5% | 4.5 | 769 |
| Cystatin | 0.05% | 5.1-6.1 | 12.7-17 |
| Avidin | 0.05% | 10 | 68.3 |

# FIG. 3

Table 2. Spiral wound nanofiltration/ultrafiltration membranes tested

| Membrane Type | MWCO | Material | Max. Pressure | Max. Temp. | pH range |
|---|---|---|---|---|---|
| NF | 600-800 Da | PA TFC | 600 psi | 122°F | 4-10 |
| UF | 1,000 Da | PA TFC | 120 psi | 131°F | 2-10 |
| UF | 3,000 Da | PA TFC | 120 psi | 131°F | 2-10 |
| UF | 5,000 Da | PES | 120 psi | 131°F | 2-10 |

# FIG. 4

Table 3. Processing scenarios

| Processing Scenario | Process# (Fig. 1) | Starting Material | Demineral-ization | Desugaring | Concen-tration | Homogeni-zation | Pasteurization/Heat Treatment | | | pH Adjustment prior to Drying | | |
|---|---|---|---|---|---|---|---|---|---|---|---|---|
| | | | | | | | Liquid Prior to Drying | Hot Room | None (Starting Material Only) | Neutral (6-8) | Low (3-5) | High (8-10) |
| Control | n/a | Raw | None | Fermentation | RO | | | ✓ | | ✓ | | |
| 1 | 1A | Raw | NF (800 Da) | Fermentation | NF (800 Da) | | | ✓ | | ✓ | | |
| 2 | 1B | Raw | NF (800 Da) | Fermentation | NF (800 Da) | | ✓ | | | ✓ | | |
| 3 | 1A | Raw | NF (800 Da) + Diafiltration | Fermentation | NF (800 Da) | | | ✓ | | ✓ | | |
| 4 | 1B | Raw | NF (800 Da) + Diafiltration | Fermentation | NF (800 Da) | | ✓ | | | ✓ | | |
| 5 | 2A | Raw | UF (1,000 Da) | Fermentation | UF (1,000 Da) | | | ✓ | | ✓ | | |
| 6 | 2A | Raw | UF (3,000 Da) | Fermentation | UF (3,000 Da) | | | ✓ | | ✓ | | |
| 7 | 2B | Pasteurized | UF (1,000 Da) | Fermentation | UF (1,000 Da) | | ✓ | | | ✓ | | |
| 8 | 2B | Pasteurized | UF (1,000 Da) | Fermentation | UF (1,000 Da) | ✓ | ✓ | | | ✓ | | |
| 9 | 2B | Pasteurized | UF (1,000 Da) | Fermentation | UF (1,000 Da) | ✓ | ✓ | | | | ✓ | |
| 10 | 2B | Pasteurized | UF (1,000 Da) | Fermentation | UF (1,000 Da) | ✓ | ✓ | | | | | ✓ |
| 11 | 2B | Pasteurized | UF (1,000 Da) + Diafiltration | Fermentation | UF (1,000 Da) | | ✓ | | | ✓ | | |
| 12 | 2B | Pasteurized | UF (1,000 Da) + Diafiltration | Fermentation | UF (1,000 Da) | ✓ | ✓ | | | ✓ | | |
| 13 | 2B | Pasteurized | UF (1,000 Da) + Diafiltration | Fermentation | UF (1,000 Da) | ✓ | ✓ | | | | ✓ | |
| 14 | 2B | Pasteurized | UF (1,000 Da) + Diafiltration | Fermentation | UF (1,000 Da) | ✓ | ✓ | | | | | ✓ |
| 15 | 3B | Pasteurized | UF (3,000 Da) + Diafiltration | Filtration | UF (3,000 Da) | | ✓ | | | ✓ | | |
| 16 | 3B | Pasteurized | UF (5,000 Da) + Diafiltration | Filtration | UF (1,000 Da) | | ✓ | | | ✓ | | |
| 17 | 3B | Pasteurized | UF (5,000 Da) + Diafiltration | Filtration | UF (1,000 Da) | | | | ✓ | | | ✓ |
| 18 | 3B | Pasteurized | UF (5,000 Da) + Diafiltration | Filtration | NF (800 Da) | | ✓ | | | ✓ | | |
| 19 | 3A | Pasteurized | UF (5,000 Da) + Diafiltration | Filtration | NF (800 Da) | | | ✓ | | ✓ | | |
| 20 | 3B | Pasteurized | UF (5,000 Da) + Diafiltration | Filtration | NF (800 Da) | | | | ✓ | ✓ | | |
| 21 | 3A | Pasteurized | UF (5,000 Da) + Diafiltration | Filtration | NF (800 Da) | | | ✓ | | ✓ | | |

# FIG. 5

Table 4. Deashing level and protein content achieved with preliminary trials

| Processing Scenario | Process# (Fig. 1) | Protein (%) | | Ash (%) | Moisture (%) | Deashing level | Whip Density (g/cm³) | Foam Stability (% Reduced) | pH |
|---|---|---|---|---|---|---|---|---|---|
| | | *Wet basis* | *Dry basis* | *Wet basis* | | | | | |
| Control | n/a | 80.2% | 86.3% | 5.50% | 7.10% | 0.0% | 0.0829 | 37.10% | 7.02 |
| 1 | 1A | 84.7% | 89.9% | 2.87% | 5.70% | 48.6% | 0.0914 | 47.10% | 7.14 |
| 2 | 1B | 85.6% | 92.5% | 2.95% | 7.50% | 46.1% | 0.1619 | 57.60% | 7.2 |
| 3 | 1A | 87.2% | 93.0% | 1.42% | 6.30% | 74.4% | 0.1061 | 51.40% | 6.02 |
| 4 | 1B | 88.0% | 95.0% | 1.41% | 7.30% | 74.3% | No Whip | No Foam | 6.09 |
| 5 | 2A | 86.7% | 92.7% | 2.66% | 6.40% | 52.0% | 0.0922 | 53.40% | 6.71 |
| 6 | 2A | 86.1% | 92.5% | 2.65% | 6.90% | 51.9% | 0.0961 | 51.00% | 6.63 |
| 7 | 2B | 86.1% | 92.4% | 1.73% | 6.80% | 68.6% | No Whip | No Foam | 6.39 |
| 8 | 2B | 86.1% | 92.4% | 3.08% | 6.80% | 44.2% | No Whip | No Foam | 6.49 |
| 9 | 2B | 86.1% | 92.4% | 3.08% | 6.80% | 44.2% | No Whip | No Foam | 3.47 |
| 10 | 2B | 92.4% | 92.4% | 3.08% | 6.80% | 44.2% | No Whip | No Foam | 10.15 |
| 11 | 2B | 88.0% | 93.3% | 1.73% | 5.70% | 69.0% | No Whip | No Foam | 5.92 |
| 12 | 2B | 88.0% | 93.3% | 1.73% | 5.70% | 69.0% | No Whip | No Foam | 6.01 |
| 13 | 2B | 88.0% | 93.3% | 1.73% | 5.70% | 69.0% | No Whip | No Foam | 3.51 |
| 14 | 2B | 88.0% | 93.3% | 1.73% | 5.70% | 69.0% | No Whip | No Foam | 9.81 |
| 15 | 3B | 87.30% | 94.0% | 1.40% | 7.16% | 74.5% | No Whip | No Foam | 8.75 |
| 16 | 3B | 87.81% | 93.4% | 1.24% | 5.98% | 77.7% | No Whip | No Foam | 6.17 |
| 17 | 3B | 88.4% | 94.7% | n/a | 6.70% | n/a | No Whip | No Foam | 8.01 |
| 18 | 3B | 89.4% | 95.2% | 1.25% | 6.10% | 77.5% | No Whip | No Foam | 6.95 |
| 19 | 3A | 88.96% | 94.5% | n/a | 5.90% | n/a | No Whip | No Foam | 6.88 |
| 20 | 3B | 87.39% | 95.2% | 1.20% | 8.20% | 77.9% | No Whip | No Foam | 6.96 |
| 21 | 3A | 88.69% | 95.7% | n/a | 7.35% | n/a | No Whip | No Foam | 6.82 |

# FIG. 6

Table 5. Powder and Liquid Color

| Processing Scenario | Process# (Fig. 1) | Powder Color | | | | Reconstructed Liquid Color (10% solids) | | | |
|---|---|---|---|---|---|---|---|---|---|
| | | $L^*$ | $a^*$ | $b^*$ | $\Delta E^*$ | $L^*$ | $a^*$ | $b^*$ | $\Delta E^*$ |
| Control | n/a | 95.32 | -4.62 | 22.54 | Control | 95.32 | -2.17 | 22.54 | Control |
| 1 | 1A | 95.67 | -.313 | 19.52 | 3.4 | 95.67 | -5.5 | 7.24 | 18.5 |
| 2 | 1B | 94.12 | -2.8 | 18.29 | 3.8 | 94.12 | -6.98 | 8.26 | 29.3 |
| 3 | 1A | 96.69 | -6.22 | 19.39 | 3.8 | 96.69 | -5.64 | 8.05 | 20.1 |
| 4 | 1B | 96.05 | -2.55 | 17.56 | 5.4 | 96.05 | -7.14 | 11.44 | 35.6 |
| 5 | 2A | 95.34 | -2.88 | 19.15 | 3.8 | 95.34 | -5.65 | 7.67 | 19.4 |
| 6 | 2A | 93.89 | -3 | 18.88 | 4.3 | 93.89 | -5.82 | 7.25 | 19.3 |
| 7 | 2B | 96.36 | -5.83 | 19.85 | 3.1 | 96.36 | -6.98 | 6.29 | 27.9 |
| 8 | 2B | 96.56 | -5.85 | 19.43 | 3.6 | 96.56 | -7.36 | 6.29 | 30.0 |
| 9 | 2B | 95.8 | -7.23 | 17.36 | 5.8 | 95.8 | -7.59 | 3.93 | 29.9 |
| 10 | 2B | 95.84 | -5.62 | 17.71 | 5.0 | 95.84 | -7.64 | 4.85 | 30.5 |
| 11 | 2B | 96.27 | -5.97 | 19.94 | 3.1 | 96.27 | -7.38 | 10.33 | 35.2 |
| 12 | 2B | 96.68 | -6.04 | 19.64 | 3.5 | 96.68 | -7.36 | 10.58 | 35.9 |
| 13 | 2B | 96.87 | -7.08 | 18.8 | 4.7 | 96.87 | -7.07 | 7.95 | 32.7 |
| 14 | 2B | 95.92 | -5.67 | 19.85 | 2.9 | 95.92 | -7.14 | 5.48 | 30.9 |
| 15 | 3B | 95.93 | -6.56 | 21.86 | 2.1 | 95.93 | -8.57 | 6.8 | 34.7 |
| 16 | 3B | 95.81 | -6.78 | 21.21 | 2.6 | 95.81 | -8.38 | 9.88 | 39.9 |
| 17 | 3B | 95.83 | -1.66 | 17.08 | 6.2 | 95.83 | -3.25 | 4.83 | 21.9 |
| 18 | 3B | 94.78 | -2.27 | 19.69 | 3.7 | 94.78 | -3.63 | 6.58 | 30.5 |
| 19 | 3A | 94.62 | -2.03 | 20.41 | 3.4 | 94.62 | -3.87 | 5.05 | 27.6 |
| 20 | 3B | 94.26 | -2.31 | 22.04 | 2.6 | 94.26 | -3.75 | 6.3 | 29.4 |
| 21 | 3A | 94.43 | -1.98 | 21.72 | 2.9 | 94.43 | -3.91 | 5.59 | 27.8 |

# FIG. 7

**FIG. 8**

**FIG. 9**

Table 6A. Texture Analysis

| Processing Scenario | Process# (Figure 1) | Gel Strength (g) | Syneresis | Visual Texture | Texture |
|---|---|---|---|---|---|
| Control | n/a | Typically 150-250 | No | Elastic | |
| 1 | 1A | 122 | Yes (slight) | Short/less elastic | |
| 2 | 1B | 94 | Yes | Soft, crumbles | |
| 3 | 1A | n/a | n/a | n/a | n/a |
| 4 | 1B | 110 | Yes (worst) | Soft, crumbles | |
| 5 | 2A | 168 | No | Short / less elastic | |
| 6 | 2A | 179 | No | Short / less elastic | |
| 7 | 2B | 218 | Mp | Soft, crumbles | |
| 8 | 2B | 179 | No | Soft, crumbles | |

# FIG. 10A

Table 6B. Analysis (Cont.)

| Processing Scenario | Process# (Figure 1) | Gel Strength (g) | Syneresis | Visual Texture | Texture |
|---|---|---|---|---|---|
| 9 | 2B | 111 | No | Soft, crumbles | |
| 10 | 2B | 144 | No | Soft, crumbles | |
| 11 | 2B | 137 | No | Soft, crumbles | |
| 12 | 2B | n/a | No | Soft, crumbles | |
| 13 | 2B | 106 | No | Soft, crumbles | |
| 14 | 2B | 93 | No | Soft, crumbles | |
| 15 | 3B | 71 | No | Short / less elastic | |
| 16 | 3B | 108 | Yes (slight) | Soft, crumbles | |
| 17 | 3B | n/a | n/a | n/a | n/a |
| 18 | 3B | 123 | No | Short / less elastic | n/a |
| 19 | 3A | 98 | No | Soft, crumbles | n/a |
| 20 | 3B | 123 | No | Soft, crumbles | n/a |
| 21 | 3A | 127 | No | Short / less elastic | n/a |

# FIG. 10B

Table 7A. Effect of Heat Treatment Prior to Drying on Protein Denaturation/Coagulation

| Temperature | | Holding Time | Average Color | | | | Appearance |
|---|---|---|---|---|---|---|---|
| °C | °F | Control | L* | a* | b* | ΔE* | |
| 50 | 122 | 0 | 35.69 | -3.95 | 7.45 | | Normal |
| | | 360 | 40.98 | -4.98 | 6.98 | 5.41 | Normal |
| 52 | 125.6 | 0 | 34.76 | -3.82 | 7.34 | | Normal |
| | | 30 | 36.13 | -4.27 | 6.93 | 1.51 | Normal |
| | | 60 | 36.98 | -4.46 | 6.83 | 2.37 | Normal |
| | | 90 | 37.77 | -4.65 | 6.77 | 3.18 | Normal |
| | | 120 | 39.44 | -4.74 | 6.76 | 4.81 | Normal |
| | | 150 | 39.23 | -5.01 | 6.77 | 4.67 | Normal |
| | | 180 | 40.07 | -5.18 | 6.77 | 5.52 | Normal |
| | | 210 | 40.82 | -5.44 | 6.85 | 6.30 | Normal |
| | | 240 | 41.42 | -5.46 | 6.92 | 6.87 | Normal |
| 54 | 129.2 | 0 | 35.50 | -3.89 | 7.86 | | Normal |
| | | 1 | 34.92 | -3.93 | 7.33 | 0.79 | Normal |
| | | 2 | 35.14 | -3.68 | 7.34 | 0.67 | Normal |
| | | 3 | 35.31 | -3.99 | 7.24 | 0.65 | Normal |
| | | 4 | 35.55 | -4.06 | 7.26 | 0.62 | Normal |
| | | 5 | 35.65 | -4.07 | 7.18 | 0.72 | Normal |
| | | 6 | 35.78 | -4.14 | 7.14 | 0.81 | Normal |
| | | 15 | 38.99 | -4.89 | 6.85 | 3.77 | Normal |
| | | 30 | 39.15 | -4.96 | 6.79 | 3.95 | Normal |
| | | 60 | 39.53 | -4.53 | 6.64 | 4.26 | Normal |
| | | 120 | 39.98 | -5.12 | 6.57 | 4.82 | Normal |
| | | 180 | 41.26 | -5.45 | 6.98 | 6.03 | Normal |
| | | 240 | 42.46 | -5.96 | 6.75 | 7.34 | Normal |
| 56.5 | 133.7 | 0 | 35.10 | -3.89 | 7.55 | | Normal |
| | | 0.5 | 35.55 | -4.00 | 7.42 | 0.48 | Normal |
| | | 1 | 36.53 | -4.24 | 7.35 | 1.48 | Normal |
| | | 1.5 | 37.17 | -4.43 | 7.37 | 2.11 | Normal |
| | | 2 | 37.94 | -4.66 | 7.45 | 2.94 | Normal |
| | | 2.5 | 39.33 | -4.93 | 7.50 | 4.36 | Normal |
| | | 3 | 42.79 | -5.62 | 7.87 | 7.88 | Minor coagulation, fluid |
| | | 3.5 | 45.01 | -6.02 | 8.36 | 10.2 | Some coagulation, fluid |
| | | 4 | 45.21 | -6.04 | 8.17 | 10.4 | Whiter, some coagulation fluid |

# FIG. 11A

Table 7B. Effect of Heat Treatment Prior to Drying on Protein Denaturation/Coagulation (Cont.)

| Temperature | | Holding Time | Average Color | | | | Appearance |
|---|---|---|---|---|---|---|---|
| °C | °F | Control | L* | a* | b* | ΔE* | |
| 58 | 136.4 | 0 | 35.03 | -3.91 | 7.52 | | Normal |
| | | 0.5 | 36.96 | -4.41 | 7.51 | 1.99 | Normal |
| | | 1 | 40.56 | -5.17 | 7.93 | 5.68 | Minor coagulation fluid |
| | | 1.5 | 45.66 | -6.10 | 8.67 | 10.08 | Whiter, some coagulation fluid |
| | | 2 | 49.03 | -6.55 | 10.34 | 14.5 | Some coagulation |
| 60 | 140 | 0 | 35.16 | -3.75 | 7.23 | | Normal |
| | | 0.5 | 40.77 | -5.20 | 8.92 | 6.04 | Minor coagulation, fluid |
| | | 1 | 43.33 | -5.72 | 9.97 | 8.84 | Some coagulation, fluid |
| | | 1.5 | 50.41 | -6.51 | 12.07 | 16.2 | Whiter, some coagulation fluid |
| | | 2 | 60.86 | -7.13 | 13.93 | 26.8 | Coagulation |
| 66 | 150.8 | 0 | 34.84 | -3.86 | 7.39 | | Normal |
| | | 0.25 | 46.80 | -5.90 | 13.76 | 13.7 | Coagulation, fluid |
| | | 0.5 | 52.84 | -6.66 | 15.17 | 19.8 | Coagulation |
| 76 | 168.8 | 0 | 34.57 | -3.85 | 7.38 | | Normal |
| | | 0.25 | 60.60 | -6.34 | 17.57 | 28.1 | Coagulation |

# FIG. 11B

FIG. 12

Table 8. Comparison of beverage mix made with egg whites vs. egg white protein isolate

| Ingredient | Egg Whites | | Egg White Protein Isolate | |
|---|---|---|---|---|
| | % | g | % | g |
| Instant Egg White Protein Isolate (REMPRO 8090-SF) | 0.00% | 0.00 | 82.01% | 28.41 |
| Instant Egg White (REMPRO 8000-SF) | 73.31% | 30.79 | 0.00% | 0.00 |
| Cane Sugar | 12.60% | 5.29 | 7.64% | 2.65 |
| Stevia | 1.32% | 0.56 | 1.60% | 0.56 |
| Xanthan Gum | 0.07% | 0.03 | 0.08% | 0.03 |
| Carrageenan | 0.40% | 0.17 | 0.48% | 0.17 |
| Cellulose Gum | 0.07% | 0.03 | 0.08% | 0.03 |
| Vanilla Flavor | 6.72% | 2.82 | 6.11% | 2.12 |
| Masking Flavors | 3.14% | 1.32 | 2.00% | 0.69 |
| Coconut Oil Powder (foam control) | 2.38% | 1.00 | 0.00% | 0.00 |
| Serving Size | 42.04 g | | 34.6 g | |
| Water | 8 fl oz | | 8 fl oz | |
| Protein Per Serving | 25.0 g | | 25.0 g | |
| Sodium Per Serving | 390 mg | | 130 mg | |
| Ingredients | Egg Whites, Cane Sugar, Stevia (Stevia Leaf Extract and Maltodextrin), Natural Flavors, Coconut Oil Powder, Gum Blend (Carrageenan, Xantham Gum, and Cellulose Gum), Sunflower Lecithin. | | Egg Whites, Cane Sugar, Stevia (Stevia Leaf Extract and Maltodextrin), Natural Flavors, Coconut Oil Powder, Gum Blend (Carrageenan, Xantham Gum, and Cellulose Gum), Sunflower Lecithin. | |
| Supplement Facts | **Supplement Facts** Serving size (42g) | | **Supplement Facts** Serving size (42g) | |

Supplement Facts (Egg Whites):

| | Amount per serving | % Daily Value |
|---|---|---|
| Calories | 150 | |
| Calories from Fat | 6 kcal | ** |
| Total Fat | 0.5g | 1%* |
| Saturated Fat | 0 g | 0%* |
| Trans Fat | 0 g | ** |
| Cholesterol | 0 mg | 0% |
| Total Carbohydrate | 12 g | 4%* |
| Total Dietary Fiber | 1 g | ** |
| Total Sugars | 6 g | ** |
| Protein | 25 g | 50%* |
| Vitamin A - IU | 3 IU | ** |
| Vitamin C | 0 mg | 0% |
| Calcium | 49 mg | 4% |
| Iron | 0 mg | 0% |
| Sodium | 390 mg | 17% |

*Percent Daily Values are based on a 2,000 calorie diet.
**Daily Value not established.

Supplement Facts (Egg White Protein Isolate):

| | Amount per serving | % Daily Value |
|---|---|---|
| Calories | 130 | |
| Calories from Fat | 4 kcal | ** |
| Total Fat | 0g | 0%* |
| Saturated Fat | 0 g | 0%* |
| Trans Fat | 0 g | ** |
| Cholesterol | 5 mg | 2% |
| Total Carbohydrate | 6 g | 2%* |
| Total Dietary Fiber | 1 g | ** |
| Total Sugars | 3 g | ** |
| Protein | 25 g | 50%* |
| Vitamin A - IU | 14 IU | ** |
| Vitamin C | 0 mg | 0% |
| Calcium | 29 mg | 2% |
| Iron | 0 mg | 0% |
| Sodium | 130 mg | 6% |

*Percent Daily Values are based on a 2,000 calorie diet.
**Daily Value not established.

# FIG. 13

Table 9. High acid RTD protein beverage formulated with egg white protein isolate

| INGREDIENT | g | % |
|---|---|---|
| Water | 441.28 | 93.26% |
| Egg White Protein Isolate (REMPRO 8090) | 18.29 | 3.87% |
| Sucralose | 1.84 | 0.39% |
| Potassium Sorbate | 0.18 | 0.04% |
| Phosphoric acid 25% | 2.94 | 0.62% |
| Citric Acid 50% | 1.19 | 0.25% |
| Liquid Natural Mango Flavor | 7.08 | 1.50% |
| Yellow Food Color | 0.37 | 0.08% |
| Service Size | 16 fl oz (473g) | |
| Protein Per Serving | 17 g | |
| Nutrition Facts | Supplement Facts | |

**Supplement Facts**

servings per container
**Serving size** (473g)

Amount per serving
**Calories** **70**

% Daily Value*

| | |
|---|---|
| **Total Fat** 0g | 0% |
| Saturated Fat 0g | 0% |
| *Trans* Fat 0g | |
| **Cholesterol** 0mg | 0% |
| **Sodium** 70mg | 3% |
| **Total Carbohydrate** 1g | 0% |
| Dietary Fiber 0g | 0% |
| Total Sugars 0g | |
| Includes 0g Added Sugars | 0% |
| **Protein** 17g | |
| Vitamin D 0mcg | 0% |
| Calcium 18mg | 2% |
| Iron 0mg | 0% |
| Potassium 51mg | 2% |

*The % Daily Value tells your how much a nutrient in a serving of food contributes to a daily diet. 2,000 calories a day is used for general nutrition advice.

Calories per gram:
Fat 9 · Carbohydrate 4 · Protein 4

# FIG. 14A

| Sample | % powder | g powder | g water | g protein / 100g powder | g protein in test | % protein in solution | Viscosity (cP)* before pasteurization (room temp) | Viscosity (cP)* after pasteurization** (room temp) | Viscosity (cP)* after pasteurization** (5°C) |
|---|---|---|---|---|---|---|---|---|---|
| Egg White Isolate Mango Beverage | 3.87% | 18.29 | 441.28 | 87.0% | 15.91 | 3.4% | 13.3 | N/A | 137.4 |

# FIG. 14B

| Sample | % powder | g powder | g water | g protein / 100g powder | g protein in test | % protein in solution | Viscosity (cP)* before pasteurization (room temp) | Viscosity (cP)* after pasteurization** (room temp) | Viscosity (cP)* after pasteurization** (5°C) |
|---|---|---|---|---|---|---|---|---|---|
| **Egg White Isolate (≥92%db protein)** | 4% | 16.00 | 384.0 | 87.0% | 13.92 | 3.5% | 9.5 | 42.8 | 54.7 |
| Dried Egg White (≥84%db protein) | 4% | 16.00 | 384.0 | 81.0% | 12.96 | 3.2% | 10.3 | **1653.0** | **1713.0** |
| **Whey Protein Isolate (≥92%db protein)** | 4% | 16.00 | 384.0 | 87.0% | 13.92 | 3.5% | 10.2 | 12.8 | 15.2 |
| Whey Protein Concentrate 80 (≥80%db protein) | 4% | 16.00 | 384.0 | 76.8% | 12.29 | 3.1% | 9.3 | 16.4 | 20.0 |
| **Milk Protein Isolate (≥90%db protein)** | 4% | 16.00 | 384.0 | **85.5%** | **13.65** | **3.4%** | **31.8** | **344.7** | **389.3** |
| Milk Protein Concentrate 80 (≥80%db protein) | 4% | 16.00 | 384.0 | 76.8% | 12.29 | 3.1% | 31.2 | 14.8 | 19.5 |

*Viscosity measure with a Brookfield LVT viscometer
**Pasteurization at 195°F for 45 seconds

# FIG. 14C

| Sample | % powder | g powder | g water | g protein / 100g powder | g protein in test | % protein in solution | Viscosity (cP)* before pasteurization (room temp) | Viscosity (cP)* after pasteurization** (room temp) | Viscosity (cP)* after pasteurization** (5°C) |
|---|---|---|---|---|---|---|---|---|---|
| **Egg White Isolate (≥92%db protein)** | 4% | 16.00 | 384.0 | 87.0% | 13.92 | 3.5% | 10.0 | 19.2 | 23.8 |
| Dried Egg White (≥84%db protein) | 4% | 16.00 | 384.0 | 81.0% | 12.96 | 3.2% | 9.7 | 486.7 | 553.3 |
| **Whey Protein Isolate (≥92%db protein)** | 4% | 16.00 | 384.0 | 87.0% | 13.92 | 3.5% | 8.7 | 18.7 | 23.0 |
| Whey Protein Concentrate 80 (≥80%db protein) | 4% | 16.00 | 384.0 | 76.8% | 12.288 | 3.1% | 9.2 | 13.3 | 16.0 |
| **Milk Protein Isolate (≥90%db protein)** | 4% | 16.00 | 384.0 | 85.5% | 13.68 | 3.4% | 13.5 | 9.3 | 16.3 |
| Milk Protein Concentrate 80 (≥80%db protein) | 4% | 16.00 | 384.0 | 76.8% | 12.288 | 3.1% | 13.8 | 9.8 | 14.0 |

*Viscosity measure with a Brookfield LVT viscometer
**Pasteurization at 195°F for 45 seconds

# FIG. 14D

1510    1520

**FIG. 15**

Table 10. Yellow cake formulations with egg white protein isolate

| Ingredient | Dried Egg White (g) | Egg White Protein Isolate (g) | | | |
|---|---|---|---|---|---|
| | Control | 1:1 Sub-stitution | Adjusted by Protein | 50% Increase Egg White Protein | 2X Increase Egg White Protein |
| Dried egg yolk | 28.08 | 28.08 | 28.08 | 28.08 | 28.08 |
| Dried egg white | 15.12 | 0 | 0 | 0 | 0 |
| Egg White Protein Isolate (Rempro 8090-D) | 0 | 15.12 | 13.79 | 20.69 | 27.59 |
| Water | 416.69 | 416.69 | 416.69 | 416.69 | 416.69 |
| Yellow Cake Mix | 432.33 | 432.33 | 432.33 | 432.33 | 432.33 |
| Vegetable oil | 68.26 | 68.26 | 68.26 | 68.26 | 68.26 |

# FIG. 16

**FIG. 17A**

**FIG. 17B**

| | | Dried Egg White | Egg White Protein Isolate | | | |
| --- | --- | --- | --- | --- | --- | --- |
| | | Control | 1:1 Substitution | Adjusted by Protein | 50% Increased Egg White Protein | 2X Increase Egg White Protein |
| Visual Appearance | | Control-Dried EY-Dried EW Lot | REMPRO 8090-D 1:1 Substitution Lot | REMPRO 8090 - Adjusted by Protein Lot | REMPRO 8090-D - 50% increase EW Protein | REMPRO 8090-D - 2 X increase EW Protein |
| Cake Height (mm) | Maximum | 53.8 | 54.5 | 51.3 | 56.1 | 56.0 |
| | Volume Index | 133.8 | 135.2 | 126.2 | 137.0 | 142.1 |
| | Symmetry Index | 27.5 | 28.3 | 27.8 | 31.4 | 26.0 |
| | Uniformly Index | 2.3 | 0.1 | 0.5 | 1.5 | 0.2 |
| Texture Analysis | Hardness (g) | 314.7 ± 73.7 | 340 ± 41.7 | 308.1 ± 62.9 | 394.5 ± 61.8 | 464.2 ± 65.2 |
| | Springiness | 0.92 ± 0.04 | 0.89 ± 0.05 | 0.90 ± 0.03 | 0.93 ± 0.02 | 0.97 ± 0.02 |
| | Gumminess | 180.5 ± 44.1 | 199.3 ± 26.2 | 173.9 ± 37.2 | 137.5 ± 36.9 | 309.9 ± 46.3 |

1800

**FIG. 18**

Table 12. Examples of baked goods made with Egg White Protein Isolate

| | Dried Egg White | Egg White Protein Isolate |
|---|---|---|
| Cookies | | |
| Pancakes | | |
| Waffles | | |

# FIG. 19

Table 13. Nutrition bars made with egg whites and egg white protein isolate

| Ingredient | Dried Egg White | | Egg White Protein Isolate | |
|---|---|---|---|---|
| | % | g | % | g |
| REMPRO 8090 egg white Isolate | 38.6% | 21.20 | 38.6% | 19.32 |
| Vanilla Flavor | 0.6% | 0.26 | 0.6% | 0.28 |
| Sugar | 13.3% | 6.25 | 13.3% | 6.65 |
| Corn Syrup | 19.3% | 9.05 | 19.3% | 9.64 |
| Brown Sugar | 7.5% | 3.50 | 7.5% | 3.73 |
| Water | 3.5% | 1.64 | 3.5% | 1.74 |
| Sorbitol | 6.2% | 2.92 | 6.2% | 3.11 |
| Honey | 3.1% | 1.46 | 3.1% | 1.55 |
| Vegetable Fat | 7.5% | 3.50 | 7.5% | 3.73 |
| Lecithin (Yelkin TS) | 0.5% | 0.22 | 0.5% | 0.23 |
| Total | 100.0% | 50.00 | 100.0% | 50.00 |

# FIG. 20

2100

2110

Dried Egg Whites    Egg White Protein Isolate

# FIG. 21

FIG. 22

FIG. 23

2400

Egg Mixture
(yolk + whites)    2410

Mircrofiltration
Fat removal    2420

2450  Permeate
Protein rich (egg white
+ yolk soluble protein)

Concentrate
Yolk Fat + Lipoprotein    2430

2460

Deflavoring
Process

Dry    2440

# FIG. 24

*Egg Yolk: Typical Composition*

| Lipids | Wet Basis | Dry Basis | % of Total Fat |
|---|---|---|---|
| Neutral Lipids | 16.41% | 37.78% | 65.0% |
| Phospholipids | 7.82% | 18.02% | 31.0% |
| Cholesterol | 1.01% | 2.33% | 4.0% |
| *Total Lipids* | *25.24%* | *58.13%* | *100.00%* |

| Proteins | Wet Basis | Dry Basis | % of Total Protein |
|---|---|---|---|
| Lipovitellins | 10.35% | 22.77% | 67.5% |
| apo low density Lipoproteins | 1.79% | 3.95% | 11.7% |
| Livetins | 1.79% | 3.95% | 11.7% |
| Phosvitin | 1.06% | 2.33% | 6.9% |
| IgY | 0.34% | 0.74% | 2.2% |
| *Total Proteins* | *15.33%* | *33.73%* | *100.00%* |
| *Total Soluble Proteins* | *3.19%* | *7.02%* | *20.80%* |

| Other | Wet Basis | Dry Basis |
|---|---|---|
| Carbohydrate | 1.30% | 2.10% |
| Ash | 1.65% | 3.30% |
| Carotenoids | 0.03% | 0.06% |
| Xanthophylls (lutein, zeaxanthin) | 0.10% | 0.21% |
| *Total Others* | *3.08%* | *5.67%* |
| *Total Solids* | *43.65%* | *97.53%* |

# FIG. 25

| Amino Acids (g per 100g) | Dried Whole Egg* | Dried Egg Yolk* | Dried Egg White* | Dried Egg White Isolate** | Dried Egg White / Egg Yolk Isolate*** |
|---|---|---|---|---|---|
| ALANINE | 2.71 | 1.75 | 5.31 | 5.68 | 5.30 |
| ARGININE | 3.07 | 2.43 | 4.81 | 5.41 | 6.01 |
| ASPARTIC ACID | 5.02 | 3.31 | 7.29 | 10.00 | 9.83 |
| CYSTINE | 1.07 | 0.59 | 2.04 | 2.40 | 2.10 |
| GLUTAMIC ACID | 6.39 | 4.26 | 11.50 | 12.58 | 12.51 |
| GLYCINE | 1.62 | 1.04 | 3.09 | 3.40 | 3.18 |
| HISTIDINE | 1.20 | 0.86 | 1.87 | 2.19 | 2.35 |
| ISOLEUCINE*** | 2.43 | 1.70 | 5.02 | 4.95 | 4.77 |
| LEUCINE*** | 4.15 | 2.91 | 7.17 | 8.03 | 8.13 |
| LYSINE | 3.34 | 2.47 | 5.08 | 6.71 | 6.54 |
| METHIONINE | 1.5 | 0.86 | 3.20 | 3.50 | 2.93 |
| PHENYLALANINE | 2.53 | 1.47 | 5.18 | 5.77 | 4.95 |
| PROLINE | 1.83 | 1.33 | 3.10 | 3.47 | 3.59 |
| SERINE | 3.77 | 2.81 | 6.08 | 6.60 | 7.39 |
| THREONINE | 2.13 | 1.55 | 3.67 | 4.27 | 4.17 |
| TRYPTOPHAN | 0.78 | 0.39 | 1.27 | 1.48 | 1.52 |
| TYROSINE | 1.98 | 1.42 | 3.31 | 3.73 | 3.88 |
| VALINE*** | 2.99 | 1.93 | 6.17 | 6.88 | 5.86 |
| Total Essential | 21.05 | 14.14 | 38.63 | 43.78 | 41.21 |
| Total BCAA*** | 9.58 | 6.54 | 18.37 | 19.86 | 18.75 |
| TOTAL | 48.51 | 32.99 | 85.16 | 97.05 | 95.00 |

| Essential Amino Acid |

*AEB Buyer's Guide
**Eurofins analysis of Rembrandt's REMPRO 8090 Egg White Isolate Product
***Calculated Theoretical Example based on Whole Egg Amino Acid Profile

## FIG. 26

| Suggested Amino Acid Scoring Patterns | Infant[1] | Preschool Child[1] | Dried Whole Egg* | Dried Egg Yolk* | Dried Egg White* | Dried Egg White Isolate** | Dried Egg White / Egg Yolk Isolate*** |
|---|---|---|---|---|---|---|---|
| (mg/g Protein) | | | | | | | |
| Histidine | 26 | 19 | 12 | 9 | 19 | 22 | 24 |
| Isoleucine | 46 | 28 | 24 | 17 | 50 | 50 | 48 |
| Leucine | 93 | 66 | 42 | 29 | 72 | 80 | 81 |
| Lysine | 66 | 58 | 33 | 25 | 51 | 67 | 65 |
| Methionion + Cystine | 42 | 25 | 26 | 14 | 52 | 59 | 50 |
| Phenylalanine + Tyrosine | 72 | 63 | 45 | 29 | 85 | 95 | 88 |
| Threonine | 43 | 34 | 21 | 15 | 37 | 43 | 42 |
| Tryptophan | 17 | 11 | 8 | 4 | 13 | 15 | 15 |
| Valine | 55 | 35 | 30 | 19 | 62 | 69 | 59 |
| Total | 480 | 339 | 241 | 161 | 440 | 499 | 472 |

[1] From FAO/WHO/UNY Expert Consultation 1985.

# FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005233053 A1
- WO 2013002786 A1
- US 20150094453 A1
- US 8916156 B